# EUROPEAN PATENT SPECIFICATION

(11) **EP 2 960 614 B1**
(45) Date of publication and mention of the grant of the patent: **14.03.2018**
(21) Application number: 13882969.2
(22) Date of filing: 19.07.2013
(51) Int. Cl.: F28F 9/013, F22B 37/20, F28F 9/00, F22B 1/02

(54) **DEVICE AND METHOD FOR SUPPRESSING VIBRATION OF HEAT TRANSFER TUBE, AND STEAM GENERATOR**
VORRICHTUNG UND VERFAHREN ZUR SCHWINGUNGSUNTERDRÜCKUNG EINES WÄRMEÜBERTRAGUNGSROHRS UND DAMPFERZEUGER
DISPOSITIF ET PROCÉDÉ PERMETTANT DE SUPPRIMER LES VIBRATIONS D'UN TUBE DE TRANSFERT DE CHALEUR ET GÉNÉRATEUR DE VAPEUR

(30) Priority: 25.04.2013 JP 2013092814
(43) Date of publication of application: 30.12.2015
(73) Proprietor: Mitsubishi Heavy Industries, Ltd., Tokyo 108-8215 (JP)
(72) Inventor: MATSUBARA, Masahito, Tokyo 108-8215 (JP); FUJIWARA, Hiroyuki, Tokyo 108-8215 (JP); TOYODA, Masanori, Tokyo 108-8215 (JP); NAKAJIMA, Nobutaka, Tokyo 108-8215 (JP); OTA, Tomohisa, Tokyo 108-8215 (JP); TOYODA, Masahiko, Tokyo 108-8215 (JP); NARITA, Ryuichi, Tokyo 108-8215 (JP); HIRO, Takafumi, Tokyo 108-8215 (JP); KUSAKABE, Takaya, Kobe-shi Hyogo 652-0854 (JP)
(74) Representative: Intès, Didier Gérard André
(86) International application number: PCT/JP2013/069638
(87) International publication number: WO 2014/174692

(56) References cited:
- EP-A2- 2 088 371
- JP-A- S6 086 393
- JP-A- S6 086 393
- JP-A- H09 250 893
- JP-A- H11 237 001
- JP-A- 2009 168 398
- JP-U- H0 571 683
- US-A1- 2007 089 856
- US-A1- 2011 146 598
- US-B1- 6 244 330

## Description

### Field

The present invention relates to a vibration suppression device and method for heat transfer tubes for suppressing vibration of a plurality of heat transfer tubes used in a heat exchanger, and a steam generator to which the vibration suppression device for heat transfer tubes is applied.

### Background

A nuclear power plant includes a nuclear reactor, a steam turbine, an electric generator, and the like. For example, a pressurized water reactor (PWR) generates high-temperature and high-pressure water which is not boiled throughout a reactor internal, using light water as a nuclear reactor coolant and a neutron moderator. The steam generator exchanges heat between the high-temperature and high-pressure water (primary cooling water) and secondary cooling water to generate steam. The steam turbine drives a turbine by this steam, and the electric generator generates electricity by this driving power.

In the steam generator, a hollow airtight body portion is provided therein with a tube bundle shroud at a predetermined distance with an inner wall face thereof, a plurality of reverse U-shaped heat transfer tubes are provided in the tube bundle shroud, ends of the heat transfer tubes are supported by a tube sheet, and thus an inlet side channel head and an outlet side channel head of the primary cooling water are formed at a lower end of the body portion. In addition, in the body portion, an inlet portion of the secondary cooling water is positioned and provided above the tube bundle shroud, a steam-water separator and a moisture separator are vertically arranged, and a steam outlet is formed on the upper side thereof. Accordingly, when the primary cooling water is supplied to the plurality of heat transfer tubes, and the secondary cooling water is supplied into the body portion, heat exchange is performed between the primary cooling water (hot water) and the secondary cooling water (cold water), so that the secondary cooling water absorbs the heat to generate steam.

However, in the steam generator, high-pressure water as the primary cooling water is supplied into the plurality of heat transfer tubes, and the external secondary cooling water is heated to generate steam. With this, the heat transfer tubes easily vibrate. In this case, the lower ends of the heat transfer tubes are supported by the tube sheet, intermediate portions are supported by a plurality of tube support plates, and an upper U bend portion is supported by a plurality of anti-vibration bars. Each anti-vibration bar is inserted among the transfer tubes to be capable of suppressing vibration of the heat transfer tubes in the out-of-plane direction (stacking direction of the heat transfer tubes) and in-plane direction (longitudinal direction of the heat transfer tubes).

On the other hand, the anti-vibration bars suppress vibration of the heat transfer tubes in the in-plane direction with friction between the heat transfer tubes and the anti-vibration bars. Therefore, when assembling precision of the heat transfer tubes or the anti-vibration bars is poor, it is difficult to sufficiently suppress the vibration of the heat transfer tubes.

To solve such problem, the techniques described in Patent Literatures below have been proposed, for example. In the heat exchanger described in Patent Literature 1, a heat transfer tube is held by plane parts of upper and lower holding plates. In a steam generator heat transfer tube support structure described in Patent Literature 2, a flat plate, a corrugated mounting plate, and a flat plate with a block are used as a support member for a U-shaped portion of a heat transfer tube. An U-shaped tube support body with nubs described in Patent Literature 3 holds a tube with tube contact faces of opposed nubs.

US 2011/146598 discloses a system for retaining boiler tubes. EP 2 088 371 discloses a structural framework for supporting the heat exchanger of a steam generator.

US 2007/089856 discloses a tube support device for a tube bundle.

### Citation List

### Patent Literature

Patent Literature 1: Japanese Laid-open Patent Publication No. 60-086393
Patent Literature 2: Japanese Laid-open Patent Publication No. 62-242796
Patent Literature 3: Japanese Laid-open Patent Publication No. 2009-024994

### Summary

### Technical Problem

The heat exchanger in Patent Literature 1 holds a heat transfer tube by plane parts of upper and lower holding plates. The outer surface of the heat transfer tube is supported by two points, which might not sufficiently suppress vibration of the heat transfer tube. In the steam generator heat transfer tube support structure described in Patent Literature 2, a heat transfer tube is held by a corrugated mounting plate and a flat plate with a block. The U-shaped tube support body with nubs described in Patent Literature 3 holds a tube with tube contact faces of opposed nubs. In these techniques, an outer surface of a heat transfer tube is supported by planes, so that impurities might be deposited onto the contact surface to cause corrosion.

The present invention aims to solve the above problem, and an object thereof is to provide a vibration suppression device and method for heat transfer tubes, and a steam generator.

### Solution to the Problem

According to an aspect of the present disclosure, a vibration suppression member for a heat transfer tube includes: a first support member including a first support surface for supporting an outer surface of the heat transfer tube on one surface side; and a second support member including a second support surface and a third support surface which tilt at different predetermined tilt angles relative to the first support surface respectively for supporting the outer surface of the heat transfer tube on one surface side, and another surface of the second support member is fixed to another surface of the first support member.

The vibration suppression member is formed by fixing the second support member having the second support surface and the third support surface is fixed to the first support member having the first support surface. With this configuration, when the vibration suppression member is disposed among a plurality of heat transfer tubes, each of the heat transfer tubes is supported by the first support surface of the first support member of one of the adjacent vibration suppression member and the second support surface and the third support surface of the second support member of the other adjacent vibration suppression member. Thus, the radial vibration of the heat transfer tube can be suppressed, whereby the vibration of the heat transfer tube can appropriately be suppressed.

In the vibration suppression member for the heat transfer tube, the first support member has a flat plate shape with a predetermined length, the first support surface is a plane continuously formed on the one surface side, the second support member extends along a longitudinal direction with a predetermined length and has a plurality of concave parts and a plurality of convex parts which are alternately and continuously formed, and the second support surface and the third support surface are opposed planes relative to the concave part.

The first support surface is formed by making the first support member into a flat plate shape, and the second support surface and the third support surface are formed by forming the second support member to have concave and convex parts. With this, three support surfaces can easily be formed, whereby the structure can be simplified, and cost can be reduced.

Advantageously, in the vibration suppression member for the heat transfer tube, the concave part and the convex part each has a trapezoidal shape, wherein an orientation of the trapezoidal shape of the concave part and an orientation of the trapezoidal shape of the convex part are opposite to each other.

Accordingly, the concave parts and the convex parts can easily be formed.

In the vibration suppression member for the heat transfer tube, the plurality of concave parts of the second support member is intermittently fixed to the first support member.

The first support member and the second support member are intermittently fixed to each other, whereby a local elastic function can be imparted to the support members. Thus, the heat transfer tube can elastically be supported to appropriately suppress vibration.

In the vibration suppression member for the heat transfer tube, a predetermined gap is formed at a position where the concave part of the second support member and the first support member are not fixed to each other.

With the configuration in which a predetermined gap is ensured between the first support member and the second support member, each support member can elastically be deformed by an amount corresponding to the predetermined gap, thereby being capable of elastically supporting the heat transfer tube and appropriately suppressing vibration.

Advantageously, in the vibration suppression member for the heat transfer tube, the concave part of the second support member is fixed to the first support member with a spacer.

The configuration in which the concave part of the second support member is fixed to the first support member via a spacer can allow all of the plurality of concave parts to have the same shape. Thus, the manufacture of the second support member is facilitated, whereby the manufacturing process can be simplified and cost can be reduced.

Advantageously, in the vibration suppression member for the heat transfer tube, the second support member includes a plurality of second support member divided units disposed in serial, and each of the second support member divided units being formed such that second concave parts that are not fixed to the first support member are located at both sides of a first concave part that is fixed to the first support member.

With the configuration in which the second support member is configured with the divided units, the manufacture of the second support member is facilitated, whereby the manufacturing process can be simplified and cost can be reduced.

Advantageously, in the vibration suppression member for the heat transfer tube, the first support surface, the second support surface, and the third support surface have a pattern capable of holding liquid.

With this configuration, the contact portion between the heat transfer tube and each of the support members can easily keep a liquid phase state, whereby a damping effect by liquid can easily be produced. Accordingly, the effect of suppressing vibration of heat transfer tubes can well be applied, whereby the vibration of the heat transfer tube can suitably be suppressed. In addition, the contact portion between the heat transfer tube and each support member can easily keep a liquid phase state, and this can prevent the generation of contamination deposited due to a gas phase state on the contact portion between the heat transfer tube and each support member. Accordingly, troubles such as corrosion of heat transfer tubes caused by contamination can be prevented.

Advantageously, in the vibration suppression member for the heat transfer tube, the pattern is formed by hollowing the support surface.

Therefore, damage to the heat transfer tube by the projections projecting from each support surface is not generated, whereby the vibration suppression member can well be in contact with the heat transfer tube without causing any damage.

Advantageously, in the vibration suppression member for the heat transfer tube, the pattern is a dimple having a plurality of dents.

Accordingly, liquid can suitably be held on each support surface with a simple configuration.

According to another aspect of the present disclosure, a manufacturing method of a vibration suppression member for a heat transfer tube includes: preparing a first support member including a first support surface for supporting an outer surface side of the heat transfer tube on one surface; preparing a second support member including a second support surface and a third support surface which tilt at different predetermined tilt angles relative to the first support surface respectively for supporting the outer surface of the heat transfer tube on one surface side; and fixing another surface of the second support member to another surface of the first support member.

Accordingly, the first support member and the second support member can be manufactured by using a flat plate material having a predetermined length, whereby manufacturing performance can be enhanced, and processing cost can be reduced.

Advantageously, in the manufacturing method of a vibration suppression member for the heat transfer tube, a plurality of concave parts and a plurality of convex parts are alternately and continuously formed along the longitudinal direction to form the second support surface and the third support surface, and the concave parts are intermittently fixed to the first support member.

Accordingly, the first support member and the second support member are intermittently fixed to each other, whereby processing cost can be reduced, and the heat transfer tube can elastically be supported to appropriately suppress vibration.

Advantageously, in the manufacturing method of a vibration suppression member for the heat transfer tube, the first support member and the second support member are fixed by welding.

Thus, the processing cost can be reduced. In this case, laser welding can be applied, whereby thermal deformation caused by the welding can be suppressed.

According to an aspect of the present invention, a vibration suppression device for heat transfer tubes, in which a plurality of heat transfer tube layer is formed by radially arraying a plurality of heat transfer tubes with a predetermined space, a heat transfer tube bundle is formed by stacking the plurality of the heat transfer tube layers, and the heat transfer tube layers adjacent to one another are disposed to shift in an arraying direction, includes a vibration suppression member disposed between the plurality of heat transfer tube layers. The vibration suppression member includes a first support member including a first support surface for supporting an outer surface of the heat transfer tube on one surface side, and a second support member including a second support surface and a third support surface which tilt at different predetermined tilt angles relative to the first support surface respectively for supporting the outer surface of the heat transfer tube on one surface side, and another surface of the second support member is fixed to another surface of the first support member.

With this configuration, when the vibration suppression member is disposed among a plurality of heat transfer tubes, each of the heat transfer tubes is supported by the first support surface of the first support member of one of the adjacent vibration suppression member and the second support surface and the third support surface of the second support member of the other adjacent vibration suppression member. Thus, the radial vibration of the heat transfer tube can be suppressed, whereby the vibration of the heat transfer tube can appropriately be suppressed.

Furthermore, in the vibration suppression device for the heat transfer tubes, the first support member has a flat plate shape with a predetermined length, the first support surface is a plane continuously formed on the one surface side, the second support member extends along a longitudinal direction with a predetermined length and has a plurality of concave parts and a plurality of convex parts which are alternately and continuously formed, the second support surface and the third support surface are opposed planes relative to the concave part, and the second support members adjacent to each other in the stacking direction of the heat transfer tube layer are arrayed such that the concave part and the convex part face each other.

The first support surface is formed by making the first support member into a flat plate shape, and the second support surface and the third support surface are formed by forming the second support member to have concave and convex parts. With this, three support surfaces can easily be formed, whereby the structure can be simplified, and cost can be reduced. Therefore, the second support members adjacent to each other in the stacking direction are disposed such that the concave part and the convex part face each other, whereby an elastic function can be imparted to the support members. Thus, the heat transfer tube can elastically be supported to appropriately suppress vibration.

Furthermore, in the vibration suppression device for the heat transfer tubes, the plurality of concave parts of the second support member is intermittently fixed to the first support member, and a predetermined gap is formed at a position where the concave part of the second support member and the first support member are not fixed to each other.

With the configuration in which a predetermined gap is ensured between the first support member and the second support member, each support member can elastically be deformed by an amount corresponding to the predetermined gap, thereby being capable of elastically supporting the heat transfer tube and appropriately suppressing vibration.

Advantageously, in the vibration suppression device for the heat transfer tubes, the heat transfer tube is supported as being pressed by the first support surface, the second support surface, and the third support surface.

With the configuration of pressing and supporting the heat transfer tube, the vibration of the heat transfer tube can appropriately be suppressed.

Advantageously, in the vibration suppression device for the heat transfer tubes, a mounting position of the heat transfer tube, which is not yet supported as being pressed by the concave part that is not fixed to the first support member, is shifted in the direction away from the second support member from a mounting position of the heat transfer tube which is not yet supported as being pressed by the concave part that is fixed to the first support member.

Almost similar pressing force can be applied to the heat transfer tube supported by the concave part not fixed to the first support member and the heat transfer tube supported by the concave part fixed to the first support member. Accordingly, the heat transfer tube is appropriately pressed and supported, whereby vibration of the heat transfer tube can be suppressed.

Advantageously, in the vibration suppression device for the heat transfer tubes, the plurality of vibration suppression members is connected and held by a plurality of holding members.

With the configuration of connecting and holding the plurality of vibration suppression members by the holding members, each of the vibration suppression members can be held at an appropriate position to suppress the vibration of the heat transfer tube.

According to another aspect of the present invention, a vibration suppression method for a vibration suppression device is defined in claim 5. This method, which applies to heat transfer tubes, in which a plurality of heat transfer tube layer is formed by radially arraying a plurality of heat transfer tubes with a predetermined space, a heat transfer tube bundle is formed by stacking the plurality of the heat transfer tube layers, and the heat transfer tube layers adjacent to one another are disposed to shift in an arraying direction, includes pressing and supporting the heat transfer tube by at least three support surfaces of a vibration suppression member disposed between the heat transfer tube layers.

With this configuration, the radial vibration of the heat transfer tube can be suppressed, whereby the vibration of the heat transfer tube can appropriately be suppressed.

According to still another aspect of the present invention, a steam generator includes: a body portion having a hollow airtight shape; a heat transfer tube bundle including a plurality of heat transfer tubes, which are disposed in the body portion with a reversed U shape and through which a primary coolant flows; a tube sheet fixed to a lower part of the body portion to support an end of each of the plurality of heat transfer tubes; an inlet side channel head and an outlet side channel head formed at a lower end of the body portion to communicate with an end of each of the plurality of heat transfer tubes; a feed water unit for feeding secondary cooling water into the body portion; a steam outlet formed at an upper end of the body portion; and any one of the above described vibration suppression device for the heat transfer tubes.

When high-pressure water as the primary cooling water is supplied into the plurality of heat transfer tubes, and the external secondary cooling water flowing through the body portion is heated to generate steam, the heat transfer tubes easily vibrate. In this case, the vibration suppression member is disposed among a plurality of heat transfer tubes. With this configuration, each of the heat transfer tubes is supported by the first support surface of the first support member of one of the adjacent vibration suppression member and the second support surface and the third support surface of the second support member of the other adjacent vibration suppression member. Thus, the radial vibration of the heat transfer tube can be suppressed, whereby the vibration of the heat transfer tube can appropriately be suppressed.

### Advantageous Effects

According to the vibration suppression member for heat transfer tubes, the manufacturing method of a vibration suppression member for heat transfer tubes, the vibration suppression device and method for heat transfer tubes, and the steam generator, the vibration suppression member is formed by fixing the second support member having the second support surface and the third support surface to the first support member having the first support surface. With this configuration, the heat transfer tube is supported by three support surfaces. Thus, the radial vibration of the heat transfer tube can be suppressed, whereby the vibration of the heat transfer tube can appropriately be suppressed.

### Brief Description of Drawings

FIG. 1 is a sectional view illustrating a vibration suppression device for heat transfer tubes according to a first embodiment of the present invention.
FIG. 2 is a plan view illustrating the vibration suppression device for heat transfer tubes according to the first embodiment of the present invention.
FIG. 3 is a schematic diagram illustrating an initial support state of heat transfer tubes by a second anti-vibration member.
FIG. 4 is a schematic diagram illustrating a support state of heat transfer tubes by the second anti-vibration member.
FIG. 5 is a schematic diagram illustrating a configuration of a nuclear power plant.
FIG. 6 is a schematic diagram illustrating a configuration of a steam generator.
FIG. 7 is a plan view illustrating a heat transfer tube bundle.
FIG. 8 is a front view illustrating the heat transfer tube bundle.
FIG. 9 is a perspective view illustrating the heat transfer tube bundle.
FIG. 10 is a sectional view illustrating a vibration suppression device for heat transfer tubes according to a second embodiment of the present invention.
FIG. 11 is a sectional view illustrating a vibration suppression device for heat transfer tubes according to a third embodiment of the present invention.
FIG. 12 is a flowchart illustrating a manufacturing method of a vibration suppression member for heat transfer tubes according to a fourth embodiment of the present invention.
FIG. 13 is a schematic diagram illustrating a pressing machine in the manufacturing method of a second anti-vibration member.
FIG. 14 is an exploded perspective view of the second anti-vibration member.
FIG. 15 is an assembly diagram of the second anti-vibration member.
FIG. 16 is a connection diagram of the second anti-vibration member.
FIG. 17 is a schematic diagram illustrating a vibration suppression device for heat transfer tubes according to a fifth embodiment of the present invention.
FIG. 18 is a schematic diagram of a first support member.

### Description of Embodiments

Hereinafter, preferred embodiments of a vibration suppression member for heat transfer tubes, a manufacturing method of the vibration suppression member for heat transfer tubes, vibration suppression device and method for heat transfer tubes, and a steam generator according to the invention will be described in detail with reference to the accompanying drawings. Note that the invention is not limited by the embodiments, and when there are two or more embodiments, the invention may include combination of the embodiments.

### First Embodiment

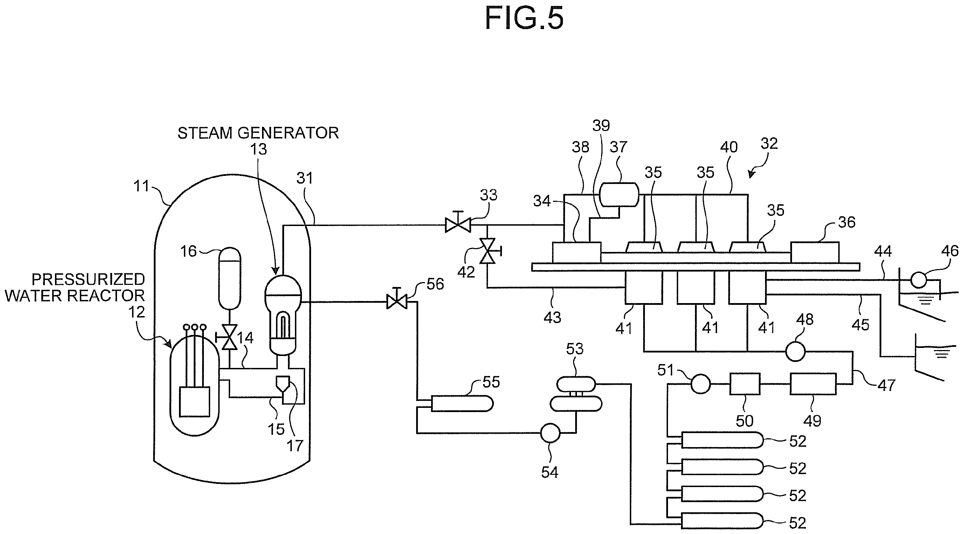

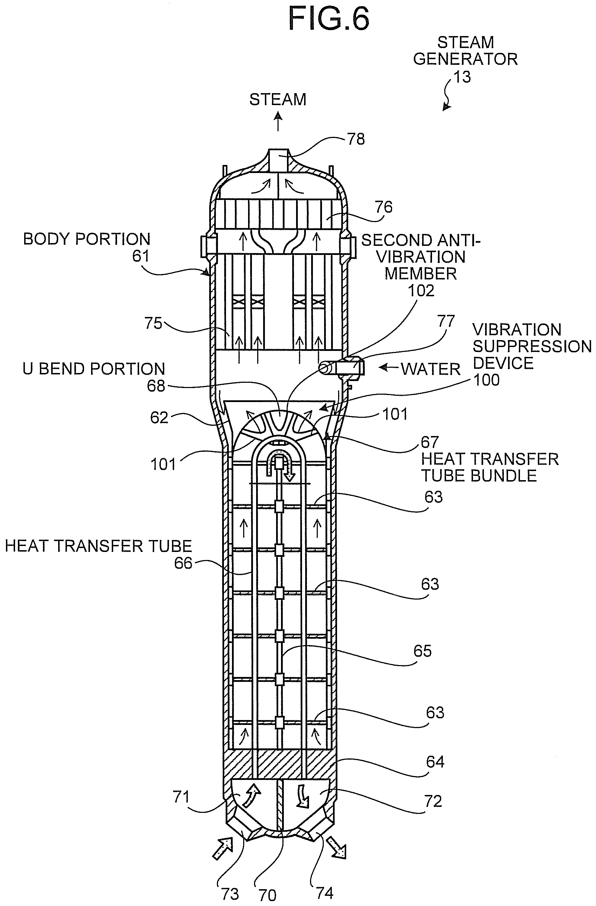

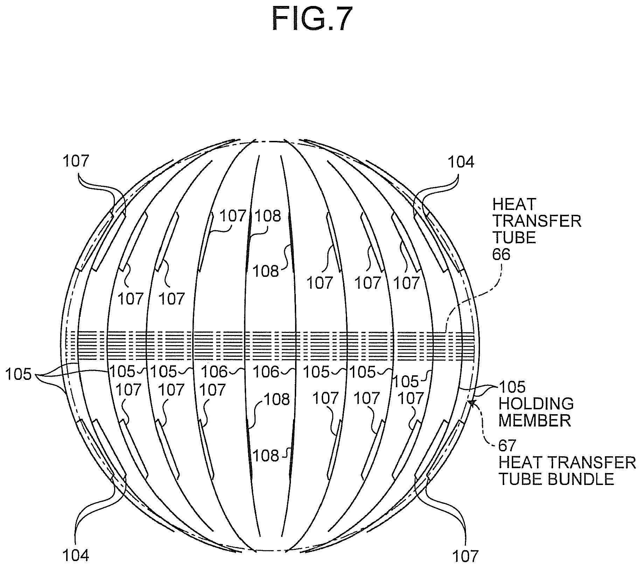

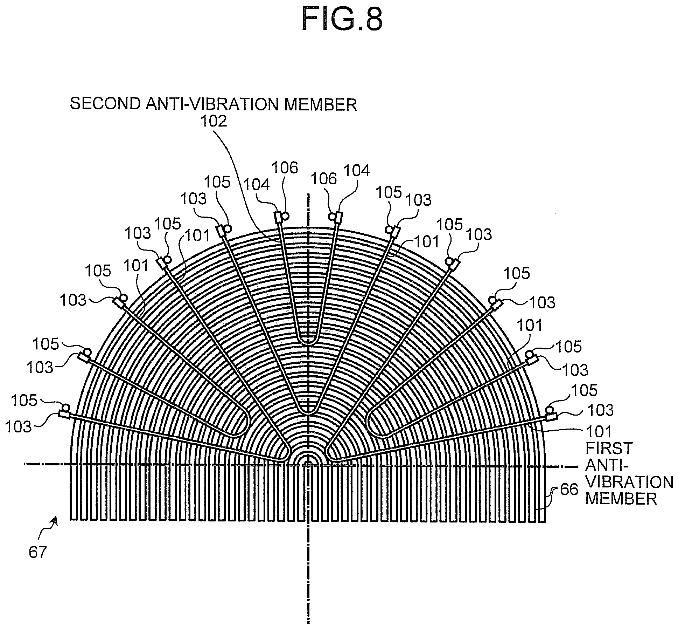

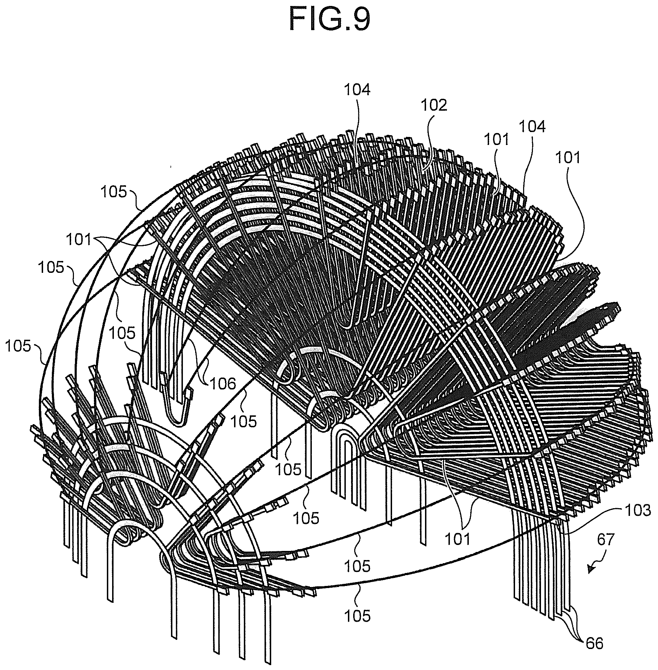

FIG. 5 is a schematic diagram illustrating a configuration of a nuclear power plant, FIG. 6 is a schematic diagram illustrating configuration of a steam generator, FIG. 7 is a plan view illustrating a heat transfer tube bundle, FIG. 8 is a front view of the heat transfer tube bundle, and FIG. 9 is a perspective view illustrating the heat transfer tube bundle.

A nuclear reactor of the first embodiment is a pressurized water reactor (PWR), in which light water is used as a nuclear reactor coolant and a neutron moderator and is prepared to be high-temperature and high-pressure water that is not boiled throughout a reactor internal portion, the high-temperature and high-pressure water is sent to a steam generator to generate steam by heat exchange, and the steam is sent to a turbine generator to generate electricity.

In a nuclear power plant having the pressurized water reactor of the first embodiment, a containment 11 is provided therein with a pressurized water reactor 12 and a steam generator 13, the pressurized water reactor 12 and the steam generator 13 are connected to each other through a high-temperature side supply tube 14 and a low-temperature side supply tube 15, the high-temperature side supply tube 14 is provided with a pressurizer 16, and the low-temperature side supply tube 15 is provided with a primary cooling water pump 17, as illustrated in FIG. 5. In this case, the light water is used as the moderator and the primary cooling water (coolant), and in order to suppress boiling of the primary cooling water in the reactor internal portion, a primary cooling system controls to keep a high-pressure state of about 150 to 160 atmospheric pressure by the pressurizer 16.

Accordingly, in the pressurized water reactor 12, the light water as the primary cooling water is heated by low-enriched uranium or MOX as fuel (atomic fuel), and the high-temperature primary cooling water kept at a predetermined high pressure by the pressurizer 16 is sent to the steam generator 13 through the high-temperature side supply tube 14. In the steam generator 13, heat exchange is performed between the high-temperature and high-pressure primary cooling water and the secondary cooling water, and the cooled primary cooling water returns to the pressurized water reactor 12 through the low-temperature side supply tube 15.

The steam generator 13 is connected to a steam turbine 32 through a tube 31 that supplies the heated secondary cooling water, that is, the steam, and the tube 31 is provided with a main steam isolation valve 33. The steam turbine 32 has a high-pressure turbine 34 and a low-pressure turbine 35, and is connected to an electric generator (power generating device) 36. In addition, a moisture isolation heater 37 is provided between the high-pressure turbine 34 and the low-pressure turbine 35. A cooling water branch tube 38 branched from the tube 31 is connected to the moisture isolation heater 37. The high-pressure turbine 34 and the moisture isolation heater 37 are connected through a low-temperature re-heating tube 39, and the moisture isolation heater 37 and the low-pressure turbine 35 are connected through a high-temperature re-heating tube 40.

In addition, the low-pressure turbine 35 of the steam turbine 32 has a condenser 41. The condenser 41 is connected to a turbine bypass tube 43 having a bypass valve 42 from the tube 31, and is connected to an intake tube 44 and a drain tube 45 that supply and discharge the cooling water (for example, seawater). The intake tube 44 has a circulation water pump 46, and the other end is disposed undersea with the drain tube 45.

The condenser 41 is connected to a tube 47, and is connected to a condenser pump 48, a grand condenser 49, a condensate demineralizer 50, a condensate booster pump 51, and a low-pressure feed water heater 52. In addition, the tube 47 is connected to a deaerator 53, and is provided with a main feed water pump 54, a high-pressure feed water heater 55, and a main feed water control valve 56.

Accordingly, in the steam generator 13, the steam generated by performing heat exchange with the high-temperature and high-pressure primary cooling water is sent to the steam turbine 32 (from the high-pressure turbine 34 to the low-pressure turbine 35) through the tube 31, and the steam turbine 32 is driven by the steam to generate electricity by the electric generator 36. In this case, after the steam from the steam generator 13 drives the high-pressure turbine 34, the moisture included in the steam is removed and heated by the moisture isolation heater 37, and then, the resultant steam drives the low-pressure turbine 35. The steam driving the steam turbine 32 is cooled using seawater by the condenser 41 to be a condensate, and returns to the steam generator 13 through the grand condenser 49, the condensate demineralizer 50, the low-pressure feed water heater 52, the deaerator 53, the high-pressure feed water heater 55, and the like.

In the steam generator 13 of the nuclear power plant configured as described above, a body portion 61 has an airtight hollow cylindrical shape, and a diameter of the lower part is slightly smaller than that of the upper part as illustrated in FIG. 6. The body portion 61 has a tube bundle shroud 62 having a cylindrical shape with a predetermined gap from an inner wall face at its lower part. The tube bundle shroud 62 includes inside a plurality of tube support plates 63 corresponding to a predetermined height position, and a tube sheet 64 fixed under the tube support plate 63, each tube support plate 63 being supported by a plurality of stay rods 65 provided to extend upward from the tube sheet 64. The tube bundle shroud 62 is provided therein with a heat transfer tube bundle 67 including a plurality of reverse U-shape heat transfer tubes 66.

The heat transfer tube bundle 67 has a U bend portion 68 as a U-shape portion at an upper part of each heat transfer tube 66. A lower end of each heat transfer tube 66 is expanded and supported by the tube sheet 64, and an intermediate part (a middle part) is supported by the plurality of tube support plates 63. In the U bend portion 68, the plurality of heat transfer tubes 66 are disposed to be substantially parallel to each other in an inner and outer direction (an up and down direction) of the tube bundle shroud 62, and are disposed to be substantially parallel to each other in a radial direction (a horizontal direction) of the tube bundle shroud 62.

In addition, the lower part of the body portion 61 has a spherical shape, and is provided with an inlet side channel head 71 and an outlet side channel head 72, which are partitioned under the tube sheet 64 by a partition wall 70, and an inlet nozzle 73 and an outlet nozzle 74. One end of each heat transfer tube 66 communicates with the inlet side channel head 71, and the other end communicates with the outlet side channel head 72.

In addition, the body portion 61 is provided with a steam-water separator 75 and a moisture separator 76 above the heat transfer tube bundle 67. The steam-water separator 75 separates the supply water into steam and hot water, and the moisture separator 76 removes moisture from the separated steam to bring the separated steam into almost dry steam. In addition, a feed water pipe 77 that supplies secondary cooling water to the inside is connected to the body portion 61 between the heat transfer tube bundle 67 and the steam-water separator 75, and a steam outlet 78 is formed at the top of the body portion 61. Specifically, the secondary cooling water supplied from the feed water pipe 77 to the inside flows down through the tube bundle shroud 62, and then, circulates upward at the tube sheet 64 to move upward in the heat transfer tube bundle 67. During the upward movement, the secondary cooling water performs heat exchange with the hot water (the primary cooling water) flowing through each heat transfer tube 66.

Accordingly, as illustrated in FIG. 5 and FIG. 6, the primary cooling water heated in the pressurized water reactor 12 is sent to the inlet side channel head 71 of the steam generator 13 through the high-temperature side supply tube 14, circulates through the plurality of heat transfer tubes 66, and reaches the outlet side channel head 72. Meanwhile, the secondary cooling water cooled by the condenser 41 is sent to the feed water pipe 77 of the steam generator 13 through the tube 47, and performs heat exchange with the hot water (the primary cooling water) passing through the body portion 61 and flowing in the heat transfer tube 66. Specifically, in the body portion 61, heat exchange is performed between the high-temperature and high-pressure primary cooling water and the secondary cooling water, and the cooled primary cooling water returns to the pressurized water reactor 12 through the low-temperature side supply tube 15 from the outlet side channel head 72. Meanwhile, the secondary cooling water subjected to the heat exchange with the high-pressure and high-temperature primary cooling water moves upward in the body portion 61, and is separated into steam and hot water by the steam-water separator 75. The moisture separator 76 removes moisture from this steam, and the resultant steam is sent from the steam outlet 78 to the steam turbine 32 through the tube 31.

In the steam generator 13 configured as described above, when the primary cooling water flows in each of the heat transfer tubes 66, flow-induced vibration is likely to occur at the U bend portion 68. In view of this, the steam generator 13 is provided with a vibration suppression device 100 at the U bend portion 68.

The U bend portion 68 of the heat transfer tube 66 is disposed at the upper end of the heat transfer tube bundle 67. Specifically, as illustrated in FIGS. 7 to 9, the heat transfer tubes 66 are arrayed such that the heat transfer tube with a larger diameter is sequentially arrayed toward the outermost side from the center to form a heat transfer tube layer. This heat transfer tube layers are stacked in a direction orthogonal to the arraying direction of the heat transfer tubes to change the outermost diameter. Thus, the heat transfer tube bundle 67 having a hemispherical shape at its upper end is formed.

The vibration suppression device 100 includes a plurality of first anti-vibration members 101 and a second anti-vibration member (vibration suppression member) 102. Each of the first anti-vibration members 101 is inserted between the stacked heat transfer tube layers of the heat transfer tubes 66. The first anti-vibration member 101 has a rectangular cross-section, and is bent into almost a V shape. The bent part is disposed at the side of the central part of each heat transfer tube 66, and both ends project from the U bend portion 68 of the heat transfer tube 66 with the largest diameter. The ends of the first anti-vibration members 101 are disposed in a line along a hemispherical arc of the heat transfer tube bundle 67. The first anti-vibration member 101 has a pair of a member with almost a large V shape and a member with a small V shape provided at the inner side of the member with almost a large V shape. Three pairs are disposed on the semicircular portion of the heat transfer tubes 66, for example. The first anti-vibration member 101 is made of a metal material (e.g., stainless 405 or stainless 410) preferable for suppressing vibration of the heat transfer tube 66.

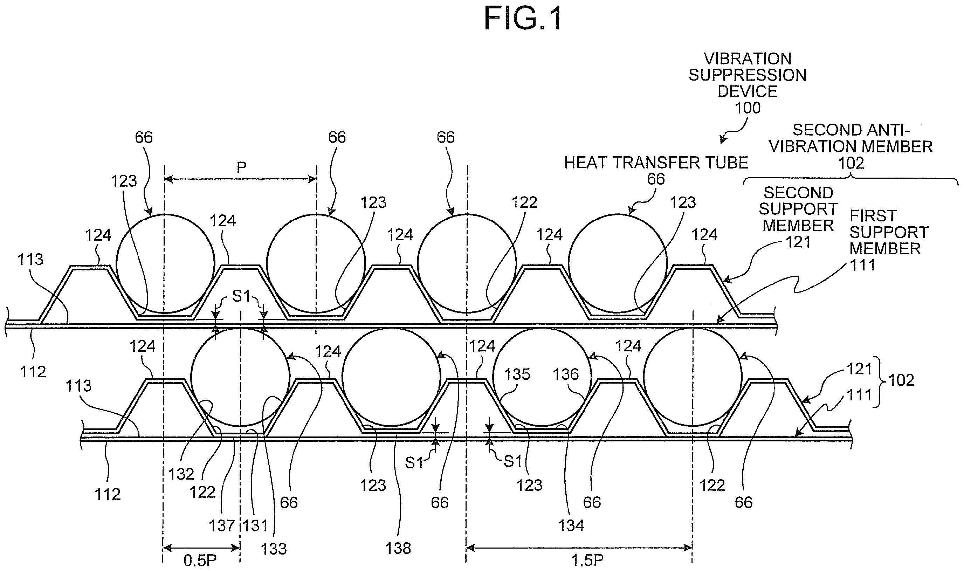

The second anti-vibration member 102 is inserted between the stacked heat transfer tube layers of the heat transfer tube 66. The second anti-vibration member 102 includes a first support member 111 and a second support member 121 (see FIG. 1), which are described below. The second anti-vibration member 102 is bent into almost a V shape. The bent part is disposed at the side of the central part of each heat transfer tube 66, and both ends project from the U bend portion 68 of the heat transfer tube 66 with the largest diameter. The end of the second anti-vibration member 102 is disposed in a line along a hemispherical arc of the heat transfer tube bundle 67. Only one second anti-vibration member 102 is disposed at the top of the U bend portion 68. The second anti-vibration member 102 is made of a metal material (e.g., stainless 405 or stainless 410) preferable for suppressing vibration of the heat transfer tube 66.

The first anti-vibration member 101 is provided with a connection member 103 on each end projecting to the outside of the U bend portion 68, and the second anti-vibration member 102 is provided with a connection member 104 on each end projecting to the outside of the U bend portion 68. Each of holding members 105 and 106 is fixed to each of the connection members 103 and 104 by welding. Each of the connection members 103 and 104 and each of the holding members 105 and 106 are made of the same metal material (e.g., inconel 690) excellent in corrosion resistance under high-temperature atmosphere. Each of the holding members 105 and 106 is a bar-like member attached along the outer periphery of the U bend portion 68 of the heat transfer tube bundle 67, and is welded to both ends of each of mounting portions 107 and 108, which is inserted between the outermost heat transfer tube 66 and the heat transfer tube 66 at the inner side of the outermost heat transfer tube 66 and has almost a reversed C shape. With this, each of the holding members 105 and 106 is mounted to the heat transfer tube bundle 67. As described above, the vibration suppression device 100 is provided to the heat transfer tube bundle 67 with the plurality of anti-vibration members 101 and 102 being inserted between the transfer tubes 66.

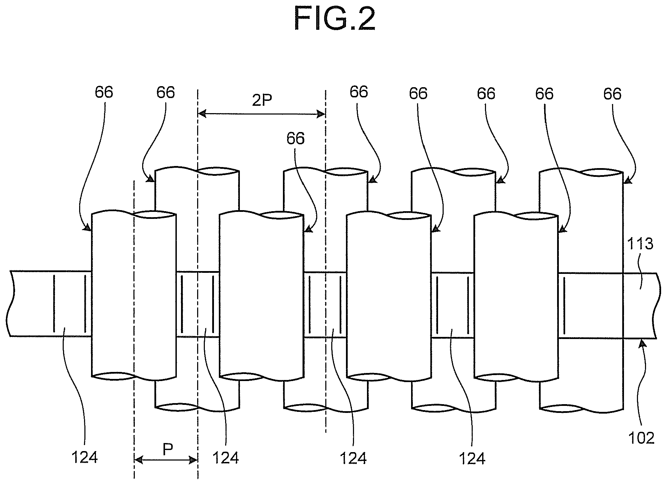

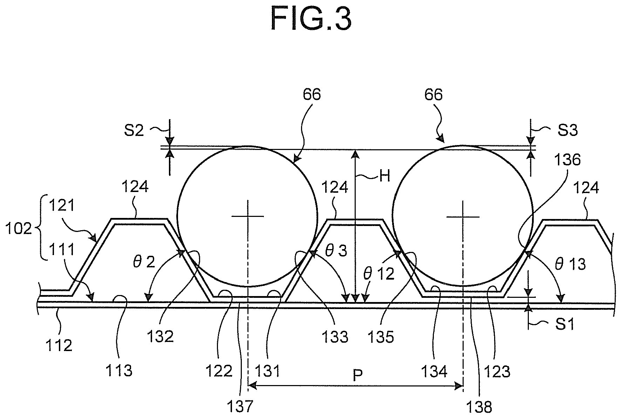

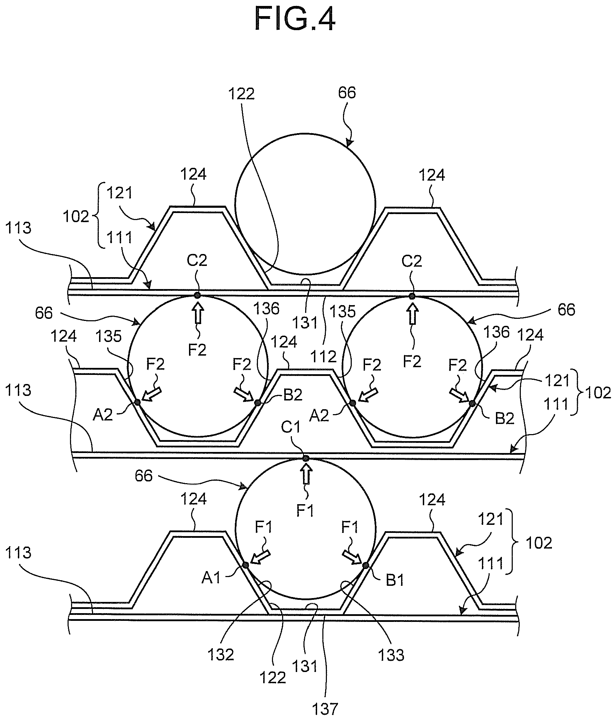

The vibration suppression device 100 and the second anti-vibration member 102 will be described here in more detail. FIG. 1 is a sectional view illustrating the vibration suppression device for heat transfer tubes according to the first embodiment of the present invention, FIG. 2 is a plan view illustrating the vibration suppression device for heat transfer tubes according to the first embodiment, FIG. 3 is a schematic diagram illustrating an initial support state of heat transfer tubes by the second anti-vibration member, and FIG. 4 is a schematic diagram illustrating a support state of heat transfer tubes by the second anti-vibration member.

As illustrated in FIGS. 1 and 2, the second anti-vibration member 102 includes the first support member 111 and the second support member 121. The first support member 111 has a flat plate shape with a predetermined width and a predetermined length. A first support surface 112 supporting outer surfaces of the heat transfer tubes 66 is formed on one surface (on a lower surface in FIG. 1). This first support surface 112 is a continuously-formed plane on one surface. A mounting surface 113 for the second support member 121 is formed on the other surface (an upper surface in FIG. 1) of the first support member 111.

The second support member 121 is formed such that a flat plate having a predetermined width and a predetermined length is pressed to form a plurality of concave parts 122 and 123 and a plurality of convex parts 124, which are continuously formed along the longitudinal direction. The concave parts 122 and 123 and the convex part 124 have a trapezoidal shape, and the orientation of the trapezoidal shape is opposite between the concave parts 122 and 123 and the convex part 124. Specifically, the second support member 121 has, on its one surface (on the upper surface in FIG. 1), a second support surface and a third support surface, which are formed to have predetermined tilt angles, different from each other, relative to the first support surface 112 to support the outer surface of the heat transfer tube 66. The other surface (the lower surface in FIG. 1) of the second support member 121 is fixed to the other surface (the upper surface in FIG. 1) of the first support member 111.

The second support member 121 is formed to have the first concave part 122, the convex part 124, the second concave part 123, the convex part 124, the second concave part 123, and the convex part 124 in order along the longitudinal direction. These six concave parts 122 and 123 and the convex parts 124 make one unit, and two or more units are continuously disposed in serial along the longitudinal direction.

The first concave part 122 has a bottom surface 131, and a second support surface 132 and a third support surface 133 which are connected to both sides of the bottom surface 131. The bottom surface 131 is substantially parallel to the first support surface 112 of the first support member 111. The second support surface 132 and the third support surface 133 are opposed planes relative to the first concave part 122, and are formed to have predetermined tilt angles θ2 and θ3 relative to the first support surface 112 of the first support member 111. In this case, the tilt angles θ2 and θ3 of the second support surface 132 and the third support surface 133 are the same, and set to be smaller than 90 degrees (60 degrees ± 15 degrees).

The second concave part 123 has a bottom surface 134, and a second support surface 135 and a third support surface 136 which are connected to both sides of the bottom surface 134. The bottom surface 134 is substantially parallel to the first support surface 112 of the first support member 111. The second support surface 135 and the third support surface 136 are opposed planes relative to the second concave part 123, and are formed to have predetermined tilt angles θ12 and θ13 relative to the first support surface 112 of the first support member 111. In this case, the tilt angles θ12 and θ13 of the second support surface 135 and the third support surface 136 are the same, and set to be smaller than 90 degrees.

The first concave part 122 out of the plurality of concave parts 122 and 123 of the second support member 121 is intermittently fixed to the first support member 111. The second concave part 123 of the second support member 121 and the first support member 111 are not fixed to each other, and a predetermined gap is formed between the second concave part 123 and the first support member 111. Specifically, the lower surface 137 of the first concave part 122 of the second support member 121 is fixed to the mounting surface 113 of the first support member 111 by welding. On the other hand, a predetermined gap S1 is formed between the lower surface 138 of the second concave part 123 of the second support member 121 and the mounting surface 113 of the first support member 111.

As described above, in the steam generator 13, a plurality of heat transfer tubes 66 are radially arrayed with a predetermined space to form a heat transfer tube layer at the U bend portion 68, and a plurality of heat transfer tube layers is stacked with a predetermined space to form the heat transfer tube bundle 67. In the heat transfer tube bundle 67, the plurality of heat transfer tubes 66 is arrayed in zigzag in a plan view. Specifically, in the stacked heat transfer tube layers, a triangular arrangement is made based on a triangle formed from straight portions in a plan view. Specifically, the adjacent heat transfer tubes 66 in the stacking direction are disposed to be shifted from each other by a distance (shift amount) of 0.5 P (P/2) that is a half of the distance P between the adjacent heat transfer tubes 66 in the arraying direction.

The above first anti-vibration member 101 and the second anti-vibration member 102 are disposed among the plurality of heat transfer tube layers radially arrayed to form the vibration suppression device 100.

In this case, the second anti-vibration member 102 is configured such that the first support member 111 having a flat plate shape and the second support member 121 having the concave parts and the convex parts are connected to each other. Therefore, the second support members 121 adjacent to each other in the stacking direction of the heat transfer tube layers are disposed such that the concave parts 122 and 123 and the convex part 124 face each other according to the plurality of heat transfer tubes 66 arrayed in zigzag. Specifically, the second support members 121 adjacent to each other in the stacking direction of the heat transfer tube layers are shifted by a distance 1.5 P that is 1.5 times (distance P + shift amount 0.5 P) the distance P between the adjacent heat transfer tubes 66 in the arraying direction. With this, the second support members 121 adjacent to each other in the stacking direction of the heat transfer tube layers are disposed such that the first concave part 122 faces the convex part 124 located between the second concave parts 123.

The plurality of first anti-vibration members 101 is held by the holding members 105 via the connection members 103, whereby each heat transfer tube 66 is kept in contact with each of the first anti-vibration members 101. On the other hand, the plurality of second anti-vibration members 102 is held by the holding members 106 via the connection members 104. Therefore, the heat transfer tube 66 is supported as being pressed by the first support surface 112, the second support surface 132, and the third support surface 133 of each of the second anti-vibration members 102.

That is, when the second anti-vibration member 102 is disposed between the heat transfer tubes 66 arrayed in zigzag, the heat transfer tube 66 disposed in the first concave part 122 is supported at three points such that the outer surface is in line contact with the second support surface 132 and the third support surface 133 of the first concave part 122 and the first support surface 112 of the first support member 111 as illustrated in FIG. 4. The heat transfer tube 66 disposed in the second concave part 123 is supported at three points such that the outer surface is in line contact with the second support surface 135 and the third support surface 136 of the second concave part 123 and the first support surface 112 of the first support member 111.

As being supported at three points by the concave parts 122 and 123, this heat transfer tube 66 is supported as being pressed by the first support surface 112, the second support surface 132, and the third support surface 133 due to the elastic deformation of the support members 111 and 121 of the second anti-vibration member 102.

Accordingly, as illustrated in FIG. 3, when the heat transfer tube 66 is supported by the first concave part 122 of the second support member 121 of the second anti-vibration member 102, the support height H (mounting position) of the heat transfer tube 66, which is not yet supported as being pressed, from the mounting surface 113 is set to be larger by S2 than the actual support height H (mounting position) of the heat transfer tube 66 from the mounting surface 113. When the heat transfer tube 66 is supported by the second concave part 123 of the second support member 121 of the second anti-vibration member 102, the support height H (mounting position) of the heat transfer tube 66, which is not yet supported as being pressed, from the mounting surface 113 is set to be larger by S3 than the actual support height H (mounting position) of the heat transfer tube 66 from the mounting surface 113.

The support height (mounting position) H + S3 of the heat transfer tube 66, which is not yet supported as being pressed by the second concave part 123 that is not fixed to the first support member 111, is larger than the support height (mounting position) H + S2 of the heat transfer tube 66 which is not yet supported as being pressed by the first concave part 122 that is fixed to the first support member 111, and the support height H + S3 is shifted in the direction away from the second support member 121. Specifically, it is set such that the height S2 < the height S3. Notably, it is set such that the height S3 < predetermined gap S1.

As a method of setting height S2 < height S3, the tilt angles θ12 and θ13 of the second support surface 135 and the third support surface 136 of the second concave part 123 may be set to be larger than the tilt angles θ2 and θ3 of the second support surface 132 and the third support surface 133 of the first concave part 122, for example. As another method, the distance between the second support surface 135 and the third support surface 136 of the second concave part 123 may be set to be smaller than the distance between the second support surface 132 and the third support surface 133 of the first concave part 122.

With this, as illustrated in FIG. 4, the heat transfer tube 66 disposed in the first concave part 122 out of the plurality of heat transfer tubes 66 is pressed by the distance (height) S2, in the state in which the second anti-vibration member 102 is disposed between the heat transfer tube layers. Specifically, the first support member 111 and the second support member 121 of the adjacent second anti-vibration member 102 are elastically deformed to cause pressing force. With this, the heat transfer tube 66 is supported such that the outer surface is in contact with three points A1, B1, and C1 which are on the second support surface 132 and the third support surface 133 of the first concave part 122 and on the first support surface 112 of the first support member 111, and receives pressing force F1 from the points A1, B1, and C1.

The heat transfer tube 66 disposed in the second concave part 123 is pressed by the distance (height) S3. Specifically, the first support member 111 and the second support member 121 of the adjacent second anti-vibration member 102 are elastically deformed to cause pressing force. With this, the heat transfer tube 66 is supported such that the outer surface is in contact with three points A2, B2, and C2 which are on the second support surface 135 and the third support surface 136 of the second concave part 123 and on the first support surface 112 of the first support member 111, and receives pressing force F2 from the points A2, B2, and C2.

As described above, in the vibration suppression member for heat transfer tubes according to the first embodiment, the second anti-vibration member 102 includes the first support member 111 provided with the first support surface 112 for supporting an outer surface of the heat transfer tube 66, and the second support member 121 provided with the second support surfaces 132 and 135 and the third support surfaces 133 and 136 for supporting an outer surface of the heat transfer tube 66 with predetermined tilt angles relative to the first support surface 112, the tilt angles being different from each other, the second support member 121 fixed to the mounting surface 113 of the first support member 111.

With this configuration, when the second anti-vibration member 102 is disposed between the heat transfer tubes 66, the heat transfer tube 66 is supported by the first support surface 112 of the first support member 111 of one of the adjacent second anti-vibration member 102 and the second support surfaces 132 and 135 and the third support surfaces 133 and 136 of the other adjacent second support member 121. Therefore, the radial vibration of the heat transfer tube 66 is suppressed by the second anti-vibration member 102, whereby the vibration of the heat transfer tube 66 can appropriately be suppressed.

In the vibration suppression member for heat transfer tubes according to the first embodiment, the first support member 111 is formed into a flat plate shape having a predetermined length, the first support surface 112 is formed into a plane, the second support member 121 is formed to have a shape with a predetermined length and with a plurality of concave parts 122 and 123 and convex parts 124, which are alternately and continuously formed in the longitudinal direction, and the second support surfaces 132 and 135 and the third support surfaces 133 and 136 are formed to be opposed planes relative to the concave parts 122 and 123. Accordingly, three support surfaces 112, 132 or 135, and 133 or 136 can easily be formed, whereby the structure can be simplified and cost can be reduced.

In this case, the heat transfer tube 66 is supported at three points which are the first support surface 112, the second support surface 132 or 135, and the third support surface 133 or 136, resulting in that the surface contact region between the heat transfer tube 66 and each of the support members 111 and 121 is reduced to prevent the occurrence of corrosion.

In the vibration suppression member for heat transfer tubes according to the first embodiment, the concave parts 122 and 123 and the convex part 124 have a trapezoidal shape, wherein the orientation of the trapezoidal shape is opposite between the concave parts 122 and 123 and the convex part 124. Accordingly, the concave parts 122 and 123 and the convex part 124 can easily be formed.

In the vibration suppression member for heat transfer tubes according to the first embodiment, the concave parts 122 of the second support member 121 are intermittently fixed to the first support member 111. The first support member 111 and the second support member 121 are intermittently fixed to each other, whereby a local elastic function can be imparted to the support members 111 and 121. Thus, the heat transfer tube 66 can elastically be supported to appropriately suppress vibration.

In the vibration suppression member for heat transfer tubes according to the first embodiment, the predetermined gap S1 is formed on the position where the concave part 123 of the second support member 121 is not fixed to the first support member 111. With this configuration, each of the support members 111 and 121 can elastically be deformed by the amount of the predetermined gap S1, whereby the heat transfer tube 66 can elastically be supported to appropriately suppress vibration.

In this case, the heat transfer tube 66 is elastically supported by the support members 111 and 121. This can eliminate a need to manufacture the support members 111 and 121 with high precision, whereby production cost can be reduced. When the heat transfer tube 66 is supported in contact with a plurality of support members for suppressing vibration, each support member has to be manufactured with high precision according to the space between the heat transfer tubes. If each support member cannot be manufactured according to the space between the heat transfer tubes, a gap is generated between the heat transfer tube and the support member, so that the vibration of the heat transfer tube cannot be suppressed. Alternatively, the heat transfer tube bundle 67 cannot be stored, because it swells too much. In the present embodiment, the heat transfer tube 66 is elastically supported by the support members 111 and 121. Therefore, the manufacturing error of the support members 111 and 121 can be absorbed by the elastic amount, whereby the manufacture is facilitated.

In the vibration suppression device for heat transfer tubes according to the first embodiment, the plurality of heat transfer tubes 66 are radially arrayed with a predetermined space to form the heat transfer tube layer, and the plurality of heat transfer tube layers is stacked with a predetermined space to form the heat transfer tube bundle 67, wherein the heat transfer tube 66 in the adjacent heat transfer tube layer is shifted by a predetermined distance 0.5 P in the arraying direction, and the second anti-vibration member 102 is disposed among the plurality of heat transfer tube layers.

With this configuration, when the second anti-vibration member 102 is disposed among the plurality of heat transfer tube layers, the heat transfer tube 66 is supported by the first support surface 112 of the first support member 111 of one of the adjacent second anti-vibration member 102 and the second support surfaces 132 or 135 and the third support surfaces 133 or 136 of the other adjacent second support member 121. Thus, the radial vibration of the heat transfer tube 66 can be suppressed, whereby the vibration of the heat transfer tube 66 can appropriately be suppressed.

In the vibration suppression device for heat transfer tubes according to the first embodiment, the heat transfer tube 66 is supported as being pressed by the first support surface 112, the second support surface 132 or 135, and the third support surface 133 or 136. With the configuration of pressing and supporting the heat transfer tube 66, the vibration of the heat transfer tube 66 can appropriately be suppressed.

In the vibration suppression device according to the first embodiment, the mounting position of the heat transfer tube 66, which is not yet supported as being pressed by the second concave part 123 that is not fixed to the first support member 111, is shifted in the direction away from the second support member 121 from the mounting position of the heat transfer tube 66 which is not yet supported as being pressed by the first concave part 122 that is fixed to the first support member 111. With this configuration, almost the same pressing force can be applied to the heat transfer tube 66, whereby the vibration of the heat transfer tube 66 can be suppressed by an appropriate pressing support of the heat transfer tube 66.

In the vibration suppression device for heat transfer tubes according to the first embodiment, the plurality of second anti-vibration members 102 are connected and held by the plurality of holding members 106. With the configuration of connecting and holding the plurality of second anti-vibration members 102 by the holding members 106, each of the second anti-vibration members 102 can be held at an appropriate position to suppress the vibration of the heat transfer tube 66.

In the vibration suppression method for heat transfer tubes according to the first embodiment, the heat transfer tube 66 is supported as being pressed by three support surfaces 112, 132 or 135, and 133 or 136 of the second anti-vibration member 102 disposed between the heat transfer tube layers of the heat transfer tubes 66. With this configuration, the radial vibration of the heat transfer tube 66 can be suppressed, whereby the vibration of the heat transfer tube 66 can appropriately be suppressed.

In the steam generator according to the first embodiment, each of the anti-vibration members 101 and 102 is disposed between the heat transfer tubes 66, whereby the vibration of the heat transfer tube 66 can appropriately be suppressed.

### Second Embodiment

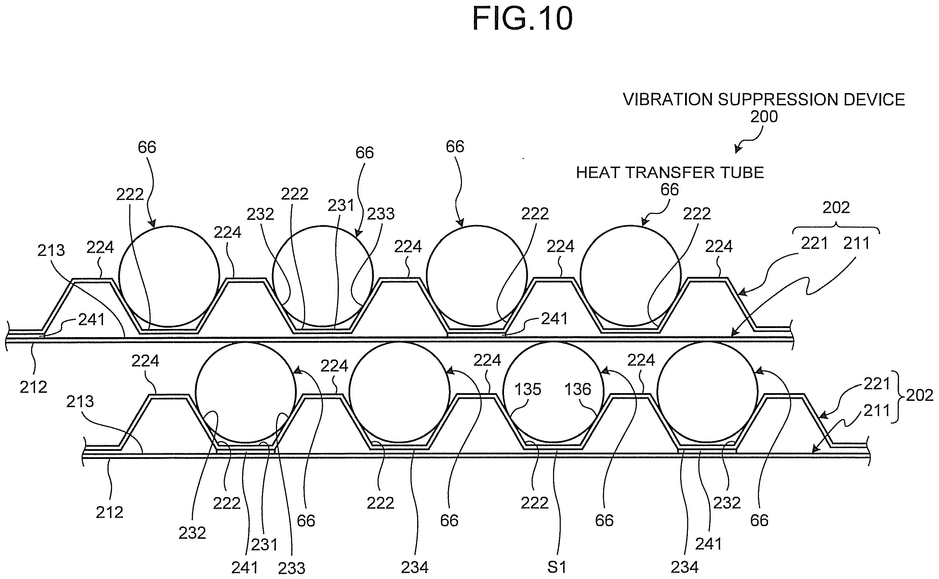

FIG. 10 is a sectional view illustrating a vibration suppression device for heat transfer tubes according to a second embodiment of the present invention. The components having the similar functions to the above embodiment are identified by the same reference numerals, and their detailed description will be omitted.

In the second embodiment, a vibration suppression device 200 is provided to a U bend portion of a heat transfer tube bundle in a steam generator as illustrated in FIG. 10. The vibration suppression device 200 includes a plurality of first anti-vibration members 101 and second anti-vibration members (vibration suppression member) 202. Each of the second anti-vibration members 202 is inserted into the stacked heat transfer tube layers of the heat transfer tubes 66, and includes a first support member 211 and a second support member 221. The second anti-vibration member 202 is bent into almost a V shape.

The first support member 211 has almost the similar configuration to the first support member 111 (see FIG. 1) in the first embodiment, and has a first support surface 212 supporting the outer surface of the heat transfer tube 66 and a mounting surface 213 for the second support member 221.

The second support member 221 has a plurality of concave parts 222 and a plurality of convex parts 224, which are continuously formed along the longitudinal direction. The concave part 222 and the convex part 224 have a trapezoidal shape, and the orientation of the trapezoidal shape is opposite between the concave part 222 and the convex part 224. The concave part 222 has a bottom surface 231, and a second support surface 232 and a third support surface 233 which are connected to both sides of the bottom surface 231. The bottom surface 231 is substantially parallel to the first support surface 212 of the first support member 211. The second support surface 232 and the third support surface 233 are opposed planes relative to the concave part 222, and are formed to have predetermined tilt angles relative to the first support surface 212 of the first support member 211.

Some of the concave parts 222 of the second support member 221 are intermittently fixed to the first support member 211. Some of the concave parts 222 of the second support member 221 are not fixed to the first support member 211, and a predetermined gap S1 is formed. Specifically, a spacer 241 is interposed between the lower surface 234 of some of the concave parts 222 of the second support member 221 and the mounting surface 213 of the first support member 211, and the second support member 221, the spacer 241, and the first support member 211 are fixed by welding. A predetermined gap S1 is formed between the lower surfaces 234 of two concave parts 222 of the second support member 221 located between the fixed concave parts 222 and the mounting surface 213 of the first support member 211.

The plurality of second anti-vibration members 202 press and support the heat transfer tube 66 by the first support surface 212, the second support surface 232, and the third support surface 233 on the concave part 222 where the first support member 211 and the second support member 221 are fixed by welding via the spacer 241. That is, when the second anti-vibration member 202 is disposed among the plurality of heat transfer tubes 66 arrayed in zigzag, the heat transfer tube 66 disposed in the concave part 222 on the fixed region is supported at three points such that the outer surface is in line contact with the second support surface 232, the third support surface 233, and the first support surface 212. As being held at three points, this heat transfer tube 66 is held as being pressed by the first support surface 212, the second support surface 232, and the third support surface 233 due to the elastic deformation of the support members 211 and 221 of the second anti-vibration member 202. While the elastically supporting method is similar to the first embodiment, it is set such that predetermined gap S1 > height S2 (see FIG. 3). In the present embodiment, it is always set such that height S3 = height S2 < predetermined gap S1. It is generally expected that the adjacent concave part 222 and the convex part 224 can be made into almost the same shape. Therefore, in this case, the heat transfer tube 66 disposed in the concave part 222 other than the fixed region is supposed to be substantially supported at three points.

As described above, in the vibration suppression member for heat transfer tubes according to the second embodiment, the second anti-vibration member 202 includes the first support member 211 provided with the first support surface 212 for supporting an outer surface of the heat transfer tube 66, and the second support member 221 provided with the second support surface 232 and the third support surface 233 for supporting an outer surface of the heat transfer tube 66 with predetermined tilt angles relative to the first support surface 212, the tilt angles being different from each other, the second support member 221 fixed to the mounting surface 213 of the first support member 211.

With this configuration, when the second anti-vibration member 202 is disposed among the plurality of heat transfer tubes 66, the heat transfer tube 66 is supported by the first support surface 212 of the first support member 211 of one of the adjacent second anti-vibration member 202 and the second support surface 232 and the third support surface 233 of the other adjacent second support member 221. Therefore, the radial vibration of the heat transfer tube 66 is suppressed by the second anti-vibration member 202, whereby the vibration of the heat transfer tube 66 can appropriately be suppressed.

In the vibration suppression member for heat transfer tubes according to the second embodiment, the concave part 222 of the second support member 221 is fixed to the first support member 211 via the spacer 241. This configuration can allow all of the plurality of concave parts 222 to have the same shape. Thus, the manufacture of the second support member 221 is facilitated, whereby the manufacturing process can be simplified and cost can be reduced.

### Third Embodiment

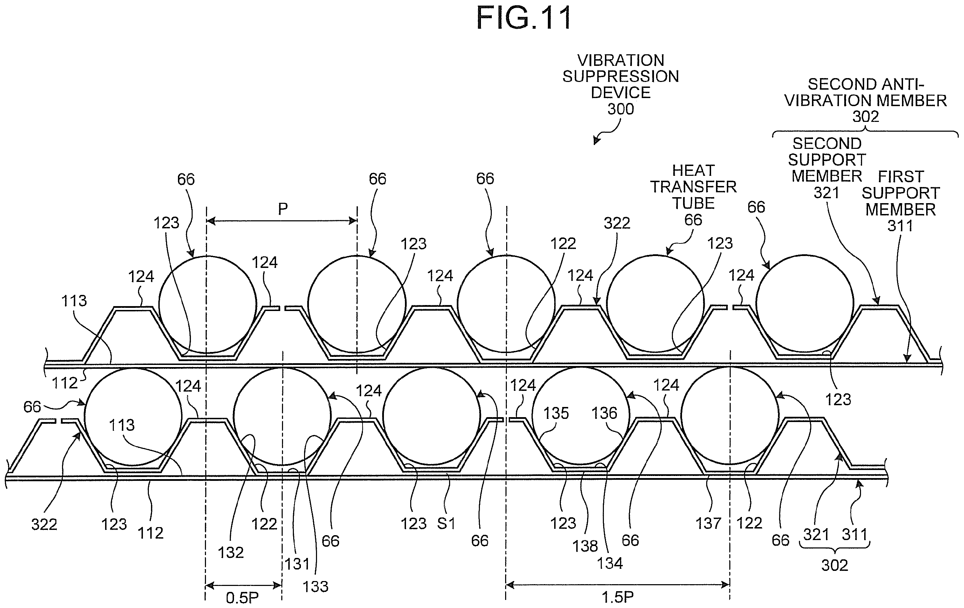

FIG. 11 is a sectional view illustrating a vibration suppression device for heat transfer tubes according to a third embodiment of the present invention. The components having the similar functions to the above embodiment are identified by the same reference numerals, and their detailed description will be omitted.

In the third embodiment, a vibration suppression device 300 is provided to a U bend portion of a heat transfer tube bundle in a steam generator as illustrated in FIG. 11. The vibration suppression device 300 includes a plurality of first anti-vibration members 101 and second anti-vibration members (vibration suppression member) 302. Each of the second anti-vibration members 302 is inserted into the stacked heat transfer tube layers of the heat transfer tubes 66, and includes a first support member 311 and a second support member 321. The second anti-vibration member 302 is bent into almost a V shape.

The first support member 311 has almost the similar configuration to the first support member 111 (see FIG. 1) in the first embodiment, and has a first support surface 112 supporting the outer surface of the heat transfer tube 66 and a mounting surface 113 for the second support member 321.

The second support member 321 has a plurality of concave parts 122 and 123 and a plurality of convex parts 124, which are continuously and alternately formed along the longitudinal direction. The concave parts 122 and 123 and the convex part 124 have a trapezoidal shape, and the orientation of the trapezoidal shape is opposite between the concave parts 122 and 123 and the convex part 124. The first concave part 122 has a bottom surface 131, and a second support surface 132 and a third support surface 133 which are connected to both sides of the bottom surface 131. The second concave part 123 has a bottom surface 134, and a second support surface 135 and a third support surface 136 which are connected to both sides of the bottom surface 134.

Specifically, the lower surface 137 of the first concave part 122 of the second support member 321 is fixed to the mounting surface 113 of the first support member 311 by welding. On the other hand, a predetermined gap S1 is formed between the lower surface 138 of the second concave part 123 of the second support member 321 and the mounting surface 113 of the first support member 311.

The plurality of second anti-vibration members 302 press and support the heat transfer tube 66 by the first support surface 112, the second support surface 132 or 135, and the third support surface 133 or 136. That is, when the second anti-vibration member 302 is disposed among the plurality of heat transfer tubes 66 arrayed in zigzag, the heat transfer tube 66 disposed in each of the concave parts 122 and 123 is supported at three points such that the outer surface is in line contact with the second support surface 132 or 135, the third support surface 133 or 136, and the first support surface 112. As being supported at three points, this heat transfer tube 66 is supported as being pressed by the first support surface 112, the second support surface 132 or 135, and the third support surface 133 or 136 due to the elastic deformation of the support members 311 and 321 of the second anti-vibration member 302. The elastically supporting method is similar to the first embodiment.

In the present embodiment, the second support member 321 includes a plurality of divided units (second support member divided unit) 322 disposed in serial. Each of the divided units 322 is formed such that the second concave parts 123 that are not fixed to the first support member 311 are located at both sides of the first concave part 122 fixed to the first support member 311. Specifically, the divided unit 322 is formed by pressing a flat plate having a predetermined width and a predetermined length to form concave parts 122 and 123 and the convex parts 124 along the longitudinal direction. In this case, the divided unit 322 is formed such that the first concave part 122 is located at the central part, and the second concave parts 123 are located on both sides of the first concave part 122 via the convex parts 124. The second support member 321 is formed such that the plurality of divided units 322 are placed upright on the first support member 311, and each of the first concave parts 122 is fixed to the first support member 311.

The divided unit 322 is fixed to the first support member 311 by the first concave part 122. However, each end in the longitudinal direction is not connected to the end of the adjacently-provided divided unit 322 to form a gap, and this can implement a structure in which the second anti-vibration member 302 is easy to be elastically deformed. With this configuration, the heat transfer tube can efficiently and elastically supported by the plurality of second anti-vibration members 302. Note that each end of the divided unit 322 may be connected to the end of the adjacently-provided divided unit 322.

In the vibration suppression member for heat transfer tubes according to the third embodiment, the second support member 321 is configured such that a plurality of divided units 322 is disposed in serial, each of the divided units 322 being formed such that the second concave parts 123 that are not fixed to the first support member 311 are located at both sides of the first concave part 122 fixed to the first support member 311.

With the configuration in which the second support member 321 is configured with the divided units 322, the manufacture of the second support member 321 is facilitated, whereby the manufacturing process can be simplified and cost can be reduced.

### Fourth Embodiment

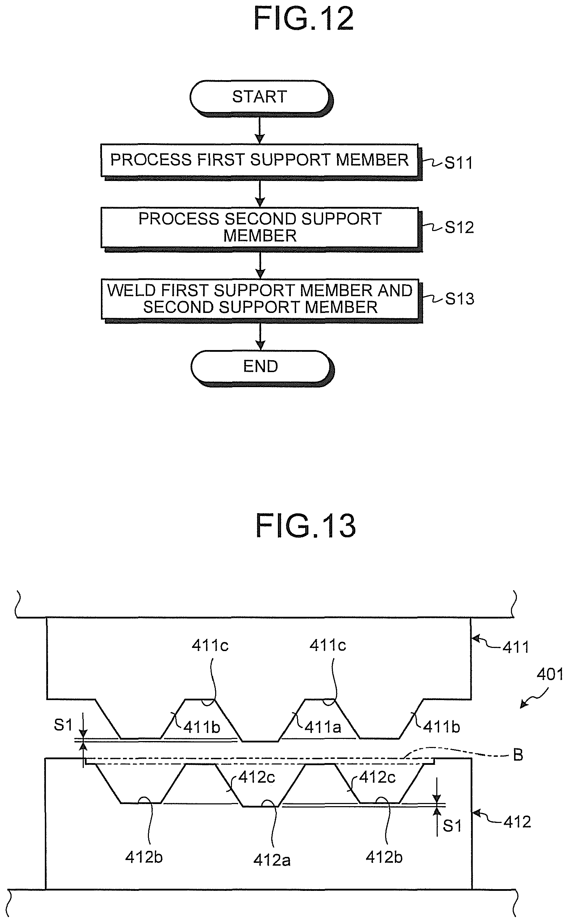

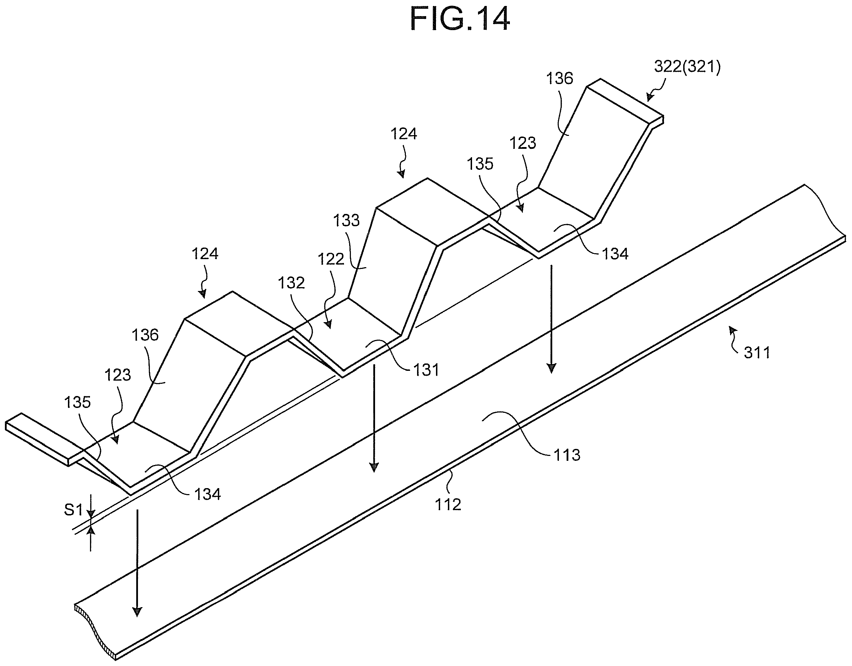

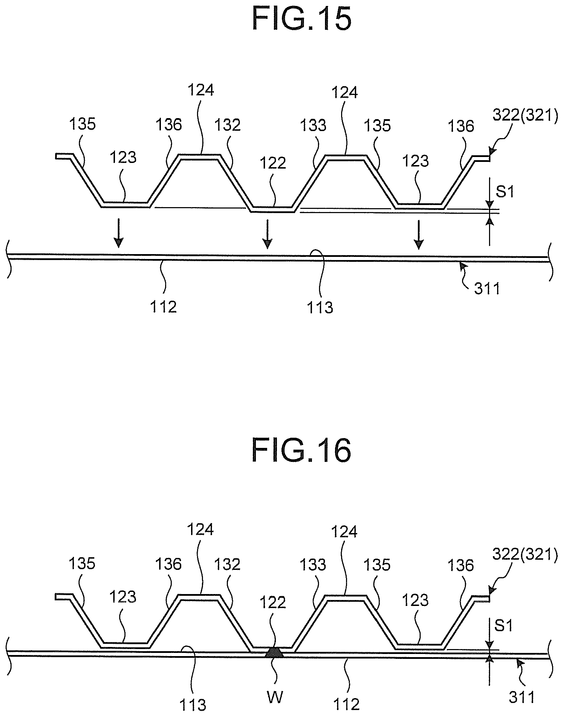

FIG. 12 is a flowchart illustrating a manufacturing method of a vibration suppression member for heat transfer tubes according to a fourth embodiment of the present invention, FIG. 13 is a schematic diagram illustrating a pressing machine for the manufacturing method of a second anti-vibration member, FIG. 14 is an exploded perspective view illustrating the second anti-vibration member, FIG. 15 is an assembly diagram illustrating the second anti-vibration member, and FIG. 16 is a connection diagram illustrating the second anti-vibration member. The basic configuration of the vibration suppression device for heat transfer tubes according to the present embodiment is almost similar to the above third embodiment, so that the vibration suppression device will be described with reference to FIG. 11. Further, the components having the similar functions to the above embodiment are identified by the same reference numerals, and their detailed description will be omitted.

In the fourth embodiment, as illustrated in FIG. 11, a second anti-vibration member 302 includes a first support member 311 and a second support member 321. The first support member 311 is provided with a first support surface 112 supporting an outer surface of a heat transfer tube 66 and a mounting surface 113 for the second support member 321. The second support member 321 has a plurality of concave parts 122 and 123 and a plurality of convex parts 124, which are continuously and alternately formed along the longitudinal direction. The second support member 321 is provided with a second support surface 132 and a third support surface 133. The lower surface 137 of the first concave part 122 of the second support member 321 and the mounting surface 113 of the first support member 311 are fixed by welding, and a predetermined gap S1 is formed between the lower surface 138 of the second concave part 123 of the second support member 321 and the mounting surface 113 of the first support member 311.

The second support member 321 is configured such that a plurality of divided units 322 is disposed in serial, each of the divided units 322 being formed such that the second concave parts 123 that are not fixed to the first support member 311 are located at both sides of the first concave part 122 fixed to the first support member 311.

As illustrated in FIG. 12, the manufacturing method of the vibration suppression member for heat transfer tubes according to the fourth embodiment includes a process S11 for producing the first support member 311, having the first support surface 112 supporting the outer surface of the heat transfer tube 66, on one surface; a process S12 for producing the second support member 321 (divided unit 322) having the second support surfaces 132 and 135 and the third support surfaces 133 and 136 for supporting the outer surface of the heat transfer tubes 66 on one surface at predetermined tilt angles, different from each other, relative to the first support surface 112; and a process S13 for fixing the other surface (concave parts 122 and 123) of the second support member to the other surface (mounting surface) 113 of the first support member 311.

In the present embodiment, the plurality of concave parts 122 and 123 and the plurality of convex parts 124 are alternately and continuously formed along the longitudinal direction to form the second support surfaces 132 and 135 and the third support surfaces 133 and 136, and the concave parts 122 and 123 are intermittently fixed to the first support member 311. The first support member 311 and the second support member 321 are fixed by welding. In this case, they are preferably welded with spot welding, arc welding, or laser welding. If the laser welding is used, a deformation (distortion) by welding heat can be suppressed.

The second support member 321 (divided unit 322) is formed by a pressing work. As illustrated in FIG. 13, a pressing machine 401 includes an upper die 411 and a lower die 412, wherein the upper die 411 can move up and down relative to the lower die 412. The upper die 411 and the lower die 412 have a convex form 411a and a concave form 412a corresponding to the first concave part 122 of the second support member 321 (divided unit 322), a convex form 411b and a concave form 412b corresponding to the second concave part 123, and a concave form 411c and a convex form 412c corresponding to the convex part 124. In this case, a height equal to the predetermined gap S1 is ensured between the convex form 411a and the convex form 411b, while a height equal to the predetermined gap S1 is ensured between the concave form 412a and the concave form 412b.

Accordingly, the second support member 321 (divided unit 322) can be manufactured by the pressing machine 401 such that a flat plate material B with a predetermined length and a predetermined width is placed on the lower die 412 as a material of the second support member 321 (divided unit 322), and the upper die 411 is lowered.

Specifically, as illustrated in FIGS. 14 to 16, the first support member 311 having the first support surface 112 and the mounting surface 113, and the second support member 321 (divided unit 322) provided with the second support surfaces 132 and 135 and the third support surfaces 133 and 136 by the concave parts 122 and 123 and the convex part 124 are prepared, and the concave parts 122 and 123 of the second support member are fixed to the mounting surface 113 of the first support member 311 by welding W, whereby the second anti-vibration member 302 is manufactured.

As described above, the manufacturing method of the vibration suppression member for heat transfer tubes according to the fourth embodiment includes the process S11 for producing the first support member 311, having the first support surface 112 supporting the heat transfer tube 66; the process S12 for producing the second support member 321 (divided unit 322) having the second support surfaces 132 and 135 and the third support surfaces 133 and 136 for supporting the heat transfer tubes 66, the second support surfaces 132 and 135 and the third support surfaces 133 and 136 for supporting the heat transfer tube 66 are set at different tilt angles each other; and the process S13 for fixing the concave parts 122 and 123 of the second support member to the mounting surface 113 of the first support member 311.

Accordingly, the first support member 311 and the second support member 321 can be manufactured by using a flat plate material having a predetermined length, whereby manufacturing performance can be enhanced, and processing cost can be reduced.

According to the manufacturing method of the vibration suppression member for heat transfer tubes in the fourth embodiment, the plurality of concave parts 122 and 123 and the plurality of convex parts 124 are alternately and continuously formed along the longitudinal direction of the second support member 321 to form the second support surfaces 132 and 135 and the third support surfaces 133 and 136, and the concave parts 122 are intermittently fixed to the first support member 311. Accordingly, the first support member 311 and the second support member 321 are intermittently fixed to each other, whereby processing cost can be reduced, and the heat transfer tube 66 can elastically be supported to appropriately suppress vibration.

In the manufacturing method of the vibration suppression member for the heat transfer tubes according to the fourth embodiment, the first support member 311 and the second support member 321 are fixed by welding W. Thus, the processing cost can be reduced. In this case, laser welding can be applied, whereby thermal deformation caused by the welding W can be suppressed.

### Fifth Embodiment

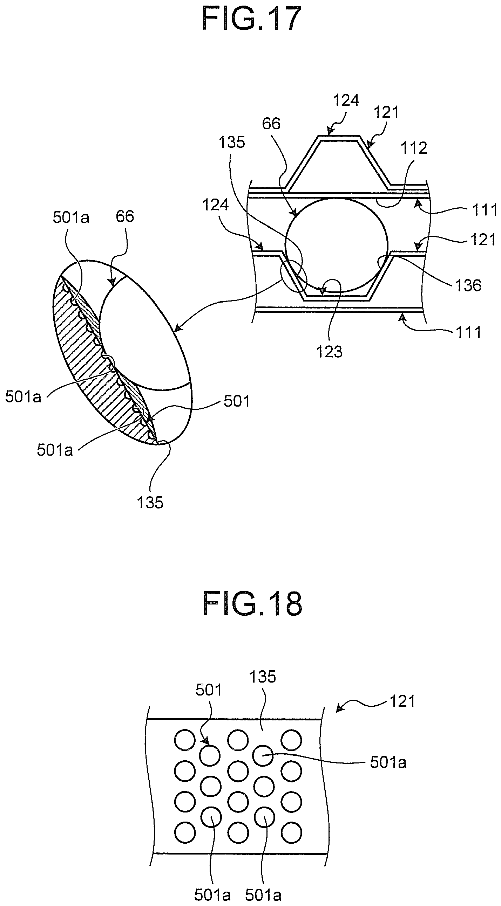

FIG. 17 is a schematic diagram illustrating a vibration suppression device for heat transfer tubes according to a fifth embodiment of the present invention, and FIG. 18 is a schematic diagram illustrating a first support member. The basic configuration of the vibration suppression device for heat transfer tubes according to the present embodiment is almost similar to the above first embodiment, so that the vibration suppression device will be described with reference to FIG. 1. Further, the components having the similar functions to the above embodiment are identified by the same reference numerals, and their detailed description will be omitted.

In the fifth embodiment, as illustrated in FIG. 1, a second anti-vibration member 102 includes a first support member 111 and a second support member 121. The first support member 111 is provided with a first support surface 112 supporting an outer surface of a heat transfer tube 66 and a mounting surface 113 for the second support member 121. The second support member 121 has a plurality of concave parts 122 and 123 and a plurality of convex parts 124, which are continuously and alternately formed along the longitudinal direction. The second support member 121 is provided with a second support surface 132 and a third support surface 133. The lower surface 137 of the first concave part 122 of the second support member 121 and the mounting surface 113 of the first support member 111 are fixed by welding, and a predetermined gap S1 is formed between the lower surface 138 of the second concave part 123 of the second support member 121 and the mounting surface 113 of the first support member 111.

Specifically, as illustrated in FIGS. 17 and 18, the first, second, and third support surfaces 112, 135, and 136 (112, 132, and 133), serving as the contact surfaces with the heat transfer tube 66, of the first and second support members 111 and 121 are provided with a dimple 501 having a plurality of dents 501a. In this case, the heat transfer tube 66 is supported by three support surfaces 112, 135, and 136 (112, 132, and 133). Therefore, the dimple 501 may be formed on at least one of these support surfaces.

The dimple 501 is formed such that a plurality of dents 501a is arrayed in zigzag. Each dent 501a of the dimple 501 is a bottomed hemispherical hole formed by denting the support surfaces 112, 135, and 136 (112, 132, and 133). Each dent 501a has a size by which liquid can be held by surface tension. The size of each dent 501a is appropriately determined according to various parameters such as an internal temperature of the steam generator or a viscosity coefficient of liquid adhered on the support members 111 and 121. The dimple 501 thus formed has a pattern shape capable of holding a liquid phase of a secondary coolant passing through the heat transfer tube bundle.

In the vibration suppression member for heat transfer tubes according to the fifth embodiment, the dimple 501 having a pattern capable of holding liquid is formed on the support surfaces 112, 135, and 136 (112, 132, and 133) of each of the support members 111 and 121.

With this configuration, the contact portion between the heat transfer tube 66 and each of the support members 111 and 121 can easily keep a liquid phase state, whereby a damping effect by liquid can easily be produced. With this configuration, the effect of suppressing vibration by the second anti-vibration member 102 can well be applied, whereby the vibration of the heat transfer tube 66 can suitably be suppressed. In addition, the contact portion between the heat transfer tube 66 and the second anti-vibration member 102 can easily keep a liquid phase state, and this can prevent the generation of contamination deposited due to a gas phase state on the contact portion between the heat transfer tube 66 and the second anti-vibration member 102. Accordingly, troubles such as corrosion of the heat transfer tube 66 by contamination can also be prevented.

In the vibration suppression member for heat transfer tubes in the fifth embodiment, each dent 501a of the dimple 501 is hollowed relative to the support surfaces 112, 135, and 136 (132, 133). Therefore, damage to the heat transfer tube 60 by the projections projecting from the support surfaces 112, 135, and 136 (132, 133) is not generated, whereby the vibration suppression member can well be in contact with the heat transfer tube 66 without causing any damage.

The vibration suppression member in the fifth embodiment has the dimple 501 as a pattern capable of holding liquid. Accordingly, liquid can suitably be held on the support surfaces 112, 135, and 136 (132, 133) with a simple configuration.

The fifth embodiment employs the dimple 501 as a pattern capable of holding liquid. However, the configuration is not limited thereto. A plurality of grooves may be employed as the pattern capable of holding liquid, for example. A plurality of grooves may be formed in parallel, or a plurality of grooves may be arrayed in a lattice.

In the above embodiments, two concave parts 123 or 222, which are not fixed to the first support member 111, 211, or 311, of the second support member 121, 221, or 321 are disposed between the concave part 122 or 222, which is fixed to the first support member 111, 211, or 311, of the second support member 121, 221, or 321. However, the configuration is not limited thereto. One or three or more concave parts 123 or 222 of the second support member 121, 221, or 321 may be disposed between the concave parts 122 or 222 of the second support member 121, 221, or 321.

In the above embodiments, each of the concave parts 122, 123, and 222 and each of the convex parts 124 and 224 has a trapezoidal shape. However, they may have a triangular shape, or the shape of the concave part and the shape of the convex part may be different from each other.

In the above embodiments, the predetermined gap S1 is formed between the concave part 123 or 222 of the second support member 121, 221, or 321 and the first support member 111, 211, or 311 to press and support the heat transfer tube with three support surfaces 112 or 212; 132, 135, or 232; and 133, 136, or 233. However, if the first support member 111, 211, or 311 and the second support member 121, 221, or 321 can be manufactured with high precision, the predetermined gap S1 is not necessarily formed.

In the above embodiments, the vibration suppression device 100, 200, or 300 is configured to include the first anti-vibration member 101 and the second anti-vibration member 102, 202, or 302. However, the number of the second anti-vibration members 102, 202, or 302 is not limited to the number in the embodiments, but any number may be set. The vibration suppression device may be configured to include only the second anti-vibration member 102, 202, or 302. The concave part 122, 123, or 222 and the convex part 124 or 224 are not necessarily formed throughout the entire length of the second anti-vibration member 102, 202, or 302. They may be formed only on the outer periphery of the U bend portion 68 on which the heat transfer tubes 66 are likely to vibrate. In addition, the second anti-vibration member 102, 202, or 302 is not necessarily formed into a V shape, but may be formed into an I (bar-like) shape.

### Reference Signs List

13 STEAM GENERATOR
61 BODY PORTION
62 TUBE BUNDLE SHROUD
63 TUBE SUPPORT PLATE
64 TUBE SHEET
66 HEAT TRANSFER TUBE
67 HEAT TRANSFER TUBE BUNDLE
68 U BEND PORTION
100,200,300 VIBRATION SUPPRESSION DEVICE
101 FIRST ANTI-VIBRATION MEMBER
102,202,302 SECOND ANTI-VIBRATION MEMBER (VIBRATION
SUPPRESSION MEMBER)
103,104 CONNECTION MEMBER
105,106 HOLDING MEMBER
111,211,311 FIRST SUPPORT MEMBER
112,212 FIRST SUPPORT SURFACE
113, 213 MOUNTING SURFACE
121,221,321 SECOND SUPPORT MEMBER
122 FIRST CONCAVE PART
123 SECOND CONCAVE PART
124,224 CONVEX PART
131, 134, 231 BOTTOM SURFACE
132,135,232 SECOND SUPPORT SURFACE
133,136,233 THIRD SUPPORT SURFACE
137, 138, 234 LOWER SURFACE
222 CONCAVE PART
241 SPACER
322 DIVIDED UNIT
401 PRESSING MACHINE
501 DIMPLE
501a DENT

## Claims

1. A vibration suppression device (100; 200; 300) for heat transfer tubes (66), in which a plurality of heat transfer tube layer is formed by radially arraying a plurality of heat transfer tubes (66) with a predetermined space, a heat transfer tube bundle (67) is formed by stacking the plurality of the heat transfer tube layers, and the heat transfer tube layers adjacent to one another are disposed to shift in an arraying direction, comprising:
a vibration suppression member (102; 202; 302) disposed between the plurality of heat transfer tube layers, wherein the vibration suppression member (102; 202; 302) includes
a first support member (111; 211; 311) including a first support surface (112; 212) for supporting an outer surface of the heat transfer tube (66) on one surface side; and
a second support member (121; 221; 321) including a second support surface (132; 135; 232) and a third support surface (133; 136; 233) which tilt at different predetermined tilt angles relative to the first support surface (112; 212) respectively for supporting the outer surface of the heat transfer tube (66) on one surface side, and another surface of the second support member (121; 221; 321) is fixed to another surface of the first support member (111; 211; 311), wherein
the first support member (111; 211; 311) has a flat plate shape with a predetermined length, the first support surface (112; 212) is a plane continuously formed on the one surface side, the second support member (121; 221; 321) extends along a longitudinal direction with a predetermined length and has a plurality of concave parts (122; 222) and a plurality of convex parts (124; 224) which are alternately and continuously formed, the second support surface (132; 135; 232) and the third support surface (133; 136; 233) are opposed planes relative to the concave part (122; 222), and the second support members (121; 221; 321) adjacent to each other in the stacking direction of the heat transfer tube layer are arrayed such that the concave part (122; 222) and the convex part (124; 224) face each other, **characterised in that**
the plurality of concave parts (122; 222) of the second support member (121; 221; 321) is intermittently fixed to the first support member (111; 211; 311), and a predetermined gap is formed at a position where the concave part (122; 222) of the second support member (121; 221; 321) and the first support member (111; 211; 311) are not fixed to each other.

2. The vibration suppression device (100; 200; 300) for the heat transfer tubes (66) according to claim 1, **characterised in that**
the heat transfer tube (66) is supported as being pressed by the first support surface (112; 212), the second support surface (132; 135; 232), and the third support surface (133; 136; 233).

3. The vibration suppression device (100; 200; 300) for the heat transfer tubes (66) according to claim 2, **characterised in that**
a mounting position of the heat transfer tube (66), which is not yet supported as being pressed by the concave part (122, 222) that is not fixed to the first support member (111; 211; 311), is shifted in the direction away from the second support member (121; 221; 321) from a mounting position of the heat transfer tube (66) which is not yet supported as being pressed by the concave part (122; 222) that is fixed to the first support member (111; 211; 311).

4. The vibration suppression device (100; 200; 300) for the heat transfer tubes (66) according to any one of claims 1 to 3, **characterised in that**
the plurality of vibration suppression members is connected and held by a plurality of holding members (105, 106).

5. A vibration suppression method for a vibration suppression device (100; 200; 300) according to any one of claims 1 to 4, the method comprising:
pressing and supporting the heat transfer tube (66) by at least three support surfaces of the vibration suppression member (102; 202; 302) disposed between the heat transfer tube layers.

6. A steam generator comprising:
a body portion (61) having a hollow airtight shape;
a heat transfer tube bundle (67) including a plurality of heat transfer tubes (66), which are disposed in the body portion (61) with a reversed U shape and through which a primary coolant flows;
a tube sheet (64) fixed to a lower part of the body portion (61) to support an end of each of the plurality of heat transfer tubes (66);
an inlet side channel head (71) and an outlet side channel head (72) formed at a lower end of the body portion (61) to communicate with an end of each of the plurality of heat transfer tubes (66);
a feed water unit (77) for feeding secondary cooling water into the body portion (61);
a steam outlet (78) formed at an upper end of the body portion (61); and
the vibration suppression device (100; 200; 300) according to any one of claims 1 to 4.

## Patentansprüche

1. Schwingungsunterdrückungsvorrichtung (100; 200; 300) für Wärmeübertragungsrohre (66), in denen mehrere von Wärmeübertragungsrohrlagen durch radiales Anordnen mehrerer von Wärmeübertragungsrohre (66) mit einem vorbestimmten Abstand gebildet sind, ein Wärmeübertragungsrohrbündel (67) durch Stapeln der mehreren Wärmeübertragungsrohrlagen gebildet ist und die einander benachbarten Wärmeübertragungsrohrlagen in einer Aufreihungsrichtung Versetzt angeordnet sind, umfassend:
ein Schwingungsunterdrückungsbauteil (102; 202; 302), das zwischen den mehreren Wärmeübertragungsrohrlagen angeordnet ist, wobei das Schwingungsunterdrückungsbauteil (102; 202; 302) enthält
ein erstes Stützbauteil (111; 211; 311), das eine erste Stützfläche (112; 212) zum Stützen einer Außenfläche des Wärmeübertragungsrohrs (66) an einer Oberflächenseite enthält, und
ein zweites Stützbauteil (121; 221; 321), das eine zweite Stützfläche (132; 135; 232) und eine dritte Stützfläche (133; 136; 233) enthält, die sich jeweils mit verschiedenen vorbestimmten Neigungswinkeln relativ zur ersten Stützfläche (112; 212) neigen, um die Außenfläche des Wärmeübertragungsrohrs (66) an einer Oberflächenseite zu stützen, und eine andere Oberfläche des zweiten Stützbauteils (121; 221; 321) an einer anderen Oberfläche des ersten Stützbauteils (111; 211; 311) fixiert ist, wobei
das erste Stützbauteil (111; 211; 311) eine flache Plattenform mit einer vorbestimmten Länge hat, die erste Stützfläche (112; 212) in einer Ebene fortlaufend auf der ersten Oberflächenseite gebildet ist, das zweite Stützbauteil (121; 221; 321) sich entlang einer Längsrichtung mit einer vorbestimmten Länge erstreckt und mehrere konkave Teile (122; 222) und mehrere konvexe Teile (124; 224) besitzt, die abwechselnd und fortlaufend gebildet sind, die zweite Stützfläche (132; 135; 232) und die dritte Stützfläche (133; 136; 233) entgegengesetzte Ebenen relativ zum konkaven Teil (122; 222) sind und die zweiten Stützbauteile (121; 221; 321), die in der Stapelrichtung der Wärmeübertragungsrohrlagen einander benachbart sind, so gereiht sind, dass der konkave Teil (122; 222) und der konvexe Teil (124; 224) zueinander zeigen, **dadurch gekennzeichnet, dass**
die mehreren konkaven Teile (122; 222) des zweiten Stützbauteils (121; 221; 321) diskontinuierlich am ersten Stützbauteil (111; 211; 311) fixiert sind und ein vorbestimmter Spalt an einer Position gebildet ist, wo der konkave Teil (122; 222) des zweiten Stützbauteils (121; 221; 321) und das erste Stützbauteil (111; 211; 311) nicht aneinander fixiert sind.

2. Schwingungsunterdrückungsvorrichtung (100; 200; 300) für die Wärmeübertragungsrohre (66) nach Anspruch 1, **dadurch gekennzeichnet, dass**
das Wärmeübertragungsrohr (66) gestützt ist, indem es von der ersten Stützfläche (112; 212), der zweiten Stützfläche (132; 135; 232) und der dritten Stützfläche (133; 136; 233) gepresst wird.

3. Schwingungsunterdrückungsvorrichtung (100; 200; 300) für die Wärmeübertragungsrohre (66) nach Anspruch 2, **dadurch gekennzeichnet, dass**
eine Montageposition des Wärmeübertragungsrohrs (66), das noch nicht gestützt ist, indem es von dem konkaven Teil (122; 222), der nicht am ersten Stützbauteil (111; 211; 311) fixiert ist, gepresst wird, in der Richtung weg vom zweiten Stützbauteil (121; 221; 321) von einer Montageposition des Wärmeübertragungsrohrs (66), das noch nicht gestützt ist, indem es von dem konkaven Teil (122; 222), der am ersten Stützbauteil (111; 211; 311) fixiert ist, gepresst wird, verschoben wird.

4. Schwingungsunterdrückungsvorrichtung (100; 200; 300) für die Wärmeübertragungsrohre (66) nach einem der Ansprüche 1 bis 3, **dadurch gekennzeichnet, dass**
die mehreren Schwingungsunterdrückungsbauteile verbunden sind und von mehreren Halterungselementen (105, 106) gehalten werden.

5. Schwingungsunterdrückungsverfahren für eine Schwingungsunterdrückungsvorrichtung (100; 200; 300) nach einem der Ansprüche 1 bis 4, wobei das Verfahren umfasst:
Pressen und Stützen des Wärmeübertragungsrohrs (66) durch mindestens drei Stützflächen des Schwingungsunterdrückungsbauteils (102; 202; 302), die zwischen den Wärmeübertragungsrohrplatten angeordnet sind.

6. Dampfgenerator, umfassend:
einen Körperabschnitt (61) mit einer hohlen luftdichten Form,
ein Wärmeübertragungsrohrbündel (67), das mehrere Wärmeübertragungsrohre (66) enthält, die im Körperabschnitt (61) mit einer umgekehrten U-Form angeordnet sind und durch die Kühlmittel strömt,
eine Rohrplatte (64), die an einem unteren Teil des Körperabschnitts (61) fixiert ist, um ein Ende jedes der mehreren Wärmeübertragungsrohre (66) zu stützen,
einen Einlassseiten-Kanalkopf (71) und einen Auslassseiten-Kanalkopf (72), die an einem unteren Ende des Körperabschnitts (61) gebildet sind, um mit einem Ende jedes der mehreren Wärmeübertragungsrohre (66) zu kommunizieren,
eine Speisewassereinheit (77) zum Einspeisen von sekundärem Kühlwasser in den Körperabschnitt (61),
einen Dampfauslass (78), der an einem oberen Ende des Körperabschnitts (61) gebildet ist, und
die Schwingungsunterdrückungsvorrichtung (100; 200; 300) nach einem der Ansprüche 1 bis 4.

## Revendications

1. Dispositif de suppression de vibration (100 ; 200 ; 300) pour des tubes de transfert de chaleur (66), dans lequel une pluralité de couches de tube de transfert de chaleur est formée en agençant radialement une pluralité de tubes de transfert de chaleur (66) avec un espace prédéterminé, un faisceau de tubes de transfert de chaleur (67) est formé en empilant la pluralité de couches de tube de transfert de chaleur, et les couches de tube de transfert de chaleur adjacentes les unes aux autres sont disposées pour se décaler dans une direction d'agencement, comprenant :
un élément de suppression de vibration (102 ; 202 ; 302) disposé entre la pluralité de couches de tube de transfert de chaleur, dans lequel l'élément de suppression de vibration (102 ; 202 ; 302) comprend
un premier élément de support (111 ; 211 ; 311) comprenant une première surface de support (112 ; 212) pour supporter une surface extérieure du tube de transfert de chaleur (66) sur un côté de surface ; et
un deuxième élément de support (121 ; 221 ; 321) comprenant une deuxième surface de support (132 ; 135 ; 232) et une troisième surface de support (133 ; 136 ; 233) qui s'inclinent à des angles d'inclinaison prédéterminés différents par rapport à la première surface de support (112 ; 212) respectivement pour supporter la surface extérieure du tube de transfert de chaleur (66) sur un côté de surface, et une autre surface du deuxième élément de support (121 ; 221 ; 321) est fixée sur une autre surface du premier élément de support (111 ; 211 ; 311), dans lequel
le premier élément de support (111 ; 211 ; 311) a une forme de plaque plate avec une longueur prédéterminée, la première surface de support (112 ; 212) est un plan formé de manière continue sur le côté de surface, le deuxième élément de support (121 ; 221 ; 321) s'étend le long d'une direction longitudinale avec une longueur prédéterminée et a une pluralité de parties concaves (122 ; 222) et une pluralité de parties convexes (124 ; 224) qui sont formées de manière alternée et continue, la deuxième surface de support (132 ; 135 ; 232) et la troisième surface de support (133 ; 136 ; 233) sont des plans opposés par rapport à la partie concave (122 ; 222), et les deuxièmes éléments de support (121 ; 221 ; 321) adjacents l'un à l'autre dans la direction d'empilement de la couche de tube de transfert de chaleur sont agencés de telle sorte que la partie concave (122 ; 222) et la partie convexe (124 ; 224) se font face, **caractérisé en ce que** la pluralité de parties concaves (122 ; 222) du deuxième élément de support (121 ; 221 ; 321) est fixée de manière intermittente sur le premier élément de support (111 ; 211 ; 311), et un espace prédéterminé est formé dans une position où la partie concave (122 ; 222) du deuxième élément de support (121 ; 221 ; 321) et le premier élément de support (111 ; 211 ; 311) ne sont pas fixés l'un à l'autre.

2. Dispositif de suppression de vibration (100 ; 200 ; 300) pour les tubes de transfert de chaleur (66) selon la revendication 1, **caractérisé en ce que**
le tube de transfert de chaleur (66) est supporté en étant pressé par la première surface de support (112 ; 212), la deuxième surface de support (132 ; 135 ; 232), et la troisième surface de support (133 ; 136 ; 233).

3. Dispositif de suppression de vibration (100 ; 200 ; 300) pour les tubes de transfert de chaleur (66) selon la revendication 2, **caractérisé en ce que**
une position de montage du tube de transfert de chaleur (66), qui n'est pas encore supporté en étant pressé par la partie concave (122 ; 222) qui n'est pas fixée sur le premier élément de support (111 ; 211 ; 311), est décalée dans la direction à l'écart du deuxième élément de support (121 ; 221 ; 321) depuis une position de montage du tube de transfert de chaleur (66) qui n'est pas encore supporté en étant pressé par la partie concave (122 ; 222) qui est fixée sur le premier élément de support (111 ; 211 ; 311).

4. Dispositif de suppression de vibration (100 ; 200 ; 300) pour les tubes de transfert de chaleur (66) selon l'une quelconque des revendications 1 à 3, **caractérisé en ce que**
la pluralité d'éléments de suppression de vibration est reliée et maintenue par une pluralité d'éléments de maintien (105, 106).

5. Procédé de suppression de vibration pour un dispositif de suppression de vibration (100 ; 200 ; 300) selon l'une quelconque des revendications 1 à 4, le procédé comportant le fait de :
presser et supporter le tube de transfert de chaleur (66) par au moins trois surfaces de support de l'élément de suppression de vibration (102 ; 202 ; 302) disposées entre les couches de tube de transfert de chaleur.

6. Générateur de vapeur comportant :
une partie de corps (61) ayant une forme étanche à l'air creuse ;
un faisceau de tubes de transfert de chaleur (67) comprenant une pluralité de tubes de transfert de chaleur (66), qui sont disposés dans la partie de corps (61) avec une forme de U inversé et à travers lesquels s'écoule un réfrigérant primaire ;
une plaque tubulaire (64) fixée sur une partie inférieure de la partie de corps (61) pour supporter une extrémité de chaque tube de la pluralité de tubes de transfert de chaleur (66) ;
une tête de canal du côté entrée (71) et une tête de canal du côté sortie (72) formées à une extrémité inférieure de la partie de corps (61) pour communiquer avec une extrémité de chaque tube de la pluralité de tubes de transfert de chaleur (66) ;
une unité d'eau d'alimentation (77) pour une alimentation en eau de refroidissement secondaire dans la partie de corps (61) ;
une sortie de vapeur (78) formée à une extrémité supérieure de la partie de corps (61) ; et
le dispositif de suppression de vibration (100 ; 200 ; 300) selon l'une quelconque des revendications 1 à 4.
